# EUROPEAN PATENT APPLICATION

(11) **EP 1 403 783 A2**
(43) Date of publication of application: **31.03.2004**
(21) Application number: 03021363.1
(22) Date of filing: 22.09.2003
(51) Int. Cl.: G06F 17/30

(54) **Audio signal feature extraction**

(30) Priority: 24.09.2002 JP 2002277001; 16.04.2003 JP 2003111121
(71) Applicant: MATSUSHITA ELECTRIC INDUSTRIAL CO., LTD., Kadoma-shi, Osaka 571-8501 (JP)
(72) Inventor: Mochinaga, Kazuhiro, Itami-shi Hyogo-ken 664-0898 (JP); Ogawa, Tomoki, Amagasaki-shi Hyogo-ken 660-0893 (JP); Mori, Yoshihiro, Hirakata-shi Osaka-fu 573-0074 (JP)
(74) Representative: Gassner, Wolfgang

(57) **Abstract**

The present invention provides a feature quantity extracting apparatus capable of more clearly distinguishing one audio signal from another audio signal. A frequency transforming section (11) performs a frequency transform on a signal portion corresponding to a prescribed time length, which is contained in an inputted audio signal, thereby deriving a frequency spectrum from the signal portion. A band extracting section (12) extracts a plurality of frequency bands from the frequency spectrum derived by the frequency transforming section (11), and outputs band spectra which are respective frequency spectra of the extracted frequency bands. A feature quantity calculating section (13) calculates respective prescribed feature quantities of the band spectra, and obtains each of the calculated prescribed feature quantities as a feature quantity of the audio signal.

## Description

### BACKGROUND OF THE INVENTION

### Field of the Invention

The present invention relates to an apparatus for extracting a feature quantity, and more particularly to an apparatus for extracting a feature quantity contained in an audio signal.

### Description of the Background Art

In recent years, acoustic fingerprint technology has received attention as a technology for identifying an audio signal. The term "acoustic fingerprint" as described herein refers to a unique feature quantity which can be extracted from an audio signal. Similar to a human fingerprint which is used for identifying a human, the acoustic fingerprint can be used for identify the audio signal. The acoustic fingerprint technology extracts an acoustic fingerprint from an audio signal, and compares the extracted acoustic fingerprint with acoustic fingerprints previously accumulated in a database or the like, thereby identifying the audio signal. For example, there is a conventional acoustic fingerprint technology used in software for exchanging files over the Internet. In this conventional acoustic fingerprint technology, the contents of files transferred or received are checked using acoustic fingerprints, thereby performing filtering. In addition to filtering, for example, it is conceivable that the acoustic fingerprint is used for music search.

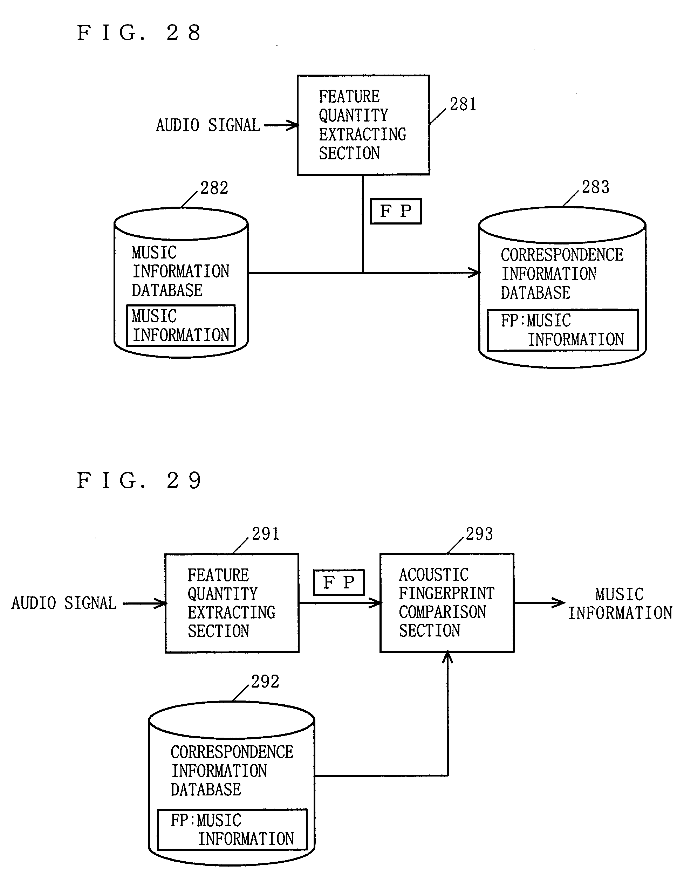

Referring to FIGs. 28 and 29, the acoustic fingerprint technology is described below. FIG. 28 is a block diagram used for explaining the course of accumulating acoustic fingerprint information in accordance with a conventional acoustic fingerprint technology. In FIG. 28, amusic information database 282 prestores management information and bibliographic information about titles of music, composers, lyricists, singers, etc. A feature quantity extracting section 281 receives an audio signal, and obtains an acoustic fingerprint (FP) from the audio signal. The obtained acoustic fingerprint is associated with music information stored in the music information database 282, and the correspondence of the acoustic fingerprint with the audio signal is stored as acoustic fingerprint information into an acoustic fingerprint information database 283.

FIG. 29 is a block diagram used for explaining the course of specifying an audio signal using the acoustic fingerprint. Described below is the course of specifying an unidentified audio signal using an acoustic fingerprint extracted therefrom. First, a feature quantity extracting section 291 receives an unidentified audio signal, and extracts an acoustic fingerprint from the unidentified audio signal. The extracted acoustic fingerprint is inputted to a fingerprint comparison section 293. In the fingerprint comparison section 293, the inputted acoustic fingerprint is compared with acoustic fingerprints accumulated in an acoustic fingerprint information database 292. Then, from among the accumulated acoustic fingerprints, an acoustic fingerprint matching the inputted acoustic fingerprint or an acoustic fingerprint having a similarity to the inputted acoustic fingerprint within certain criteria is detected. Thereafter, music information related to the detected acoustic fingerprint is outputted. In this manner, music information for the unidentified audio signal can be obtained.

Another method devised for identifying an audio signal uses digital watermarking. In this method which uses the digital watermarking, music information is previously embedded in an audio signal, and the embedded music information is used for identifying the audio signal. In such a digital watermarking technology, it is necessary to embed information into the audio signal itself, and therefore there is a possibility that the sound quality of the audio signal might be deteriorated. On the other hand, the above-described technology, which uses the acoustic fingerprint, has an advantage in that the audio signal itself does not undergo any changes, and therefore the sound quality of the audio signal is not deteriorated.

Conventionally, a physical quantity, such as a signal amplitude, a bandwidth, the number of pitches, or a Mel frequency cepstrum coefficient (MFCC) , is extracted as the feature quantity to be used as the acoustic fingerprint. Further, statistical nature, such as an average or a standard deviation of each of the above-described physical quantities, is obtained as the feature quantity for identifying an audio signal (see, for example, the specification of US patent No. 5,918,223).

In the acoustic fingerprint technology, it is necessary to clearly distinguish one audio signal from another audio signal. However, the feature quantity to be extracted as the acoustic fingerprint is conventionally a basic physical quantity of an audio signal, and therefore, in the case of using the audio signal's basic physical quantity as the acoustic fingerprint, there is a possibility that audio signals having similar characteristics might not be clearly distinguished from each other. In such a case, the basic physical quantity does not function as the acoustic fingerprint.

### SUMMARY OF THE INVENTION

Therefore, an object of the present invention is to provide a feature quantity extracting apparatus capable of clearly distinguishing one audio signal from another audio signal.

The present invention has the following features to attain the object mentioned above.

A first aspect of the present invention is directed to a feature quantity extracting apparatus including: a frequency transforming section; a band extracting section; and a feature quantity calculating section. The frequency transforming section performs a frequency transform on a signal portion corresponding to a prescribed time length, which is contained in an inputted audio signal, to derive a frequency spectrum from the signal portion. The band extracting section extracts a plurality of frequency bands from the frequency spectrum derived by the frequency transforming section, and outputs band spectra which are respective frequency spectra of the extracted frequency bands. The feature quantity calculating section calculates respective prescribed feature quantities of the band spectra, and obtains the calculated prescribed feature quantities as feature quantities of the audio signal.

Further, the band extracting section may extract the plurality of frequency bands obtained by dividing the frequency spectrum, which has been derived by the frequency transforming section, at uniform intervals on a linear scale of a frequency axis. Alternatively, the band extracting section may extract the plurality of frequency bands obtained by dividing the frequency spectrum, which has been derived by the frequency transforming section, at uniform intervals on a logarithmic scale of a frequency axis.

Furthermore, the band extracting section may extract only frequency bands within a prescribed frequency range from the frequency spectrum derived by the frequency transforming section.

Further still, the band extracting section may extract frequency bands so as to generate a prescribed space between adjacent frequency bands extracted.

Typically, the feature quantity calculating section calculates peak values corresponding to values at respective peaks of the band spectra, and obtains, as the prescribed feature quantities, values of difference between peak values of frequency bands. The feature quantity calculating section may use binary values to represent the values of difference between peak values of frequency bands, the binary values indicating a sign of a corresponding one of the values of difference.

Typically, the feature quantity calculating section calculates peak frequencies corresponding to frequencies at respective peaks of the band spectra, and obtains, as the prescribed feature quantities, numerical values related to the calculated peak frequencies. Alternatively, the feature quantity calculating section may calculate, as the prescribed feature quantities, values of difference between peak frequencies of frequency bands. The feature quantity calculating section may represent the prescribed feature quantities using binary values indicating whether a corresponding one of the values of difference between peak frequencies of frequency bands is greater than a prescribed value.

Further still, the frequency transforming section may extract from the audio signal the signal portion corresponding to a prescribed time length at prescribed time intervals. In this case, the feature quantity calculating section includes a peak frequency calculating section for calculating peak frequencies corresponding to frequencies at respective peaks of the band spectra; and a peak frequency time variation calculating section for calculating, as the prescribed feature quantities, numerical values related to respective time variation quantities of the peak frequencies calculated by the peak frequency calculating section.

Further still, the peak frequency time variation calculating section may obtain, as the prescribed feature quantities, binary values indicating a sign of a corresponding one of the time variation quantities of the peak frequencies. Alternatively, the peak frequency time variation calculating section may obtain, as the prescribed feature quantities, binary values indicating whether a corresponding one of the time variation quantities of the peak frequencies is greater than a prescribed value.

Further still, the feature quantity calculating section may calculate, as the prescribed feature quantities, effective values of respective frequency spectra of the frequency bands.

Further still, the frequency transforming section may extract from the audio signal the signal portion corresponding to a prescribed time length at prescribed time intervals. In this case, the feature quantity calculating section includes: an effective value calculating section for calculating effective values of respective frequency spectra of the band spectra; and an effective value time variation calculating section for calculating, as the prescribed feature quantities, numerical values related to respective time variation quantities of the effective values calculated by the effective value calculating section.

Further still, the effective value time variation calculating section may obtain, as the prescribed feature quantities, binary values indicating a sign of a corresponding one of the time variation quantities of the effective values. Alternatively, the effective value time variation calculating section may obtain, as the prescribed feature quantities, binary values indicating whether a corresponding one of the time variation quantities of the effective values is greater than a prescribed value.

Further still, the frequency transforming section may extract from the audio signal the signal portion corresponding to a prescribed time length at prescribed time intervals. In this case, the feature quantity calculating section may calculate a cross-correlation value between a frequency spectrum of a frequency band extracted by the band extracting section and another frequency spectrum on the same frequency band in a signal portion different from the signal portion from which the frequency band extracted by the band extracting section is obtained, the cross-correlation value being calculated for each frequency band extracted by the band extracting section, and the feature quantity calculating section may use as the feature quantities numerical values related to the cross-correlation values.

Furtherstill,the feature quantity calculating section may calculate, as the prescribed feature quantities, binary values indicating a sign of a corresponding one of the cross-correlation values. Alternatively, the feature quantity calculating section may calculate, as the prescribed feature quantities, numerical values related to respective time variation quantities of the calculated cross-correlation values.

A second aspect of the present invention is directed to a feature quantity extracting apparatus including a signal extracting section and a feature quantity calculating section. The signal extracting section extracts from an extracted audio signal a plurality of signal portions each corresponding to a prescribed time length. The feature quantity calculating section calculates a cross-correlation value between one of the plurality of signal portions extracted by the signal extracting section and another of the plurality of signal portions, the feature quantity calculating section obtaining a numerical value related to the calculated cross-correlation value as a feature quantity of the audio signal.

Typically, the feature quantity calculating section obtains the cross-correlation value as the feature quantity of the audio signal. Alternatively, the feature quantity calculating section may obtain a binary value as the feature quantity of the audio signal, the binary value indicating a sign of the cross-correlation value.

Further,the signal extracting section may extract the signal portions at prescribed time intervals. In this case, the feature quantity calculating section includes: a cross-correlation value calculating section for calculating the cross-correlation value at the prescribed time intervals; and a cross-correlation value time variation calculating section for calculating a time variation quantity of the cross-correlation value as the feature quantity of the audio signal.

A third aspect of the present invention is directed to a feature quantity extracting apparatus including: a frequency transforming section; an envelope curve deriving section; and a feature quantity calculating section. The frequency transforming section performs a frequency transform on a signal portion corresponding to a prescribed time length, which is contained in an inputted audio signal, to derive frequency spectra from the signal portion. The envelope curve deriving section derives envelope signals which represents envelop curves of the frequency spectra derived by the frequency transforming section. The feature quantity calculating section calculates, as feature quantities of the audio signal, numerical values related to respective extremums of the envelope signals derived by the envelope curve deriving section.

Further, the feature quantity calculating section may obtain, as the feature quantities of the audio signal, extremum frequencies each being a frequency corresponding to one of the extremums of the envelope signals derived by the envelope curve deriving section.

Furthermore, the feature quantity calculating section may include: an extremum frequency calculating section for calculating the extremum frequencies each being a frequency corresponding to one of the extremums of the envelope signals derived by the envelope curve deriving section; and a space calculating section for calculating spaces between adjacent extremum frequencies as the feature quantities of the audio signal. Alternatively, the space calculating section may obtain, as the feature quantities of the audio signal, numerical values which represent a space as a ratio to a prescribed reference value.

Further still, the space calculating sectionmay obtain, as the prescribed reference value, the lowest of the extremum frequencies. Alternatively, the space calculating section may obtain, as the prescribed reference value, a value of difference between the lowest and the second lowest of the extremum frequencies.

A fourth aspect of the present invention is directed to a program recording apparatus including any one of the feature quantity extracting apparatuses according to the first through third aspects.

A fifth aspect of the present invention is directed to a program reproduction control apparatus including any one of the feature quantity extracting apparatuses according to the first through third aspects.

As described above, in the first aspect, a frequency spectrum is divided into a plurality of frequency bands, and a feature quantity is extracted for each frequency band. Thus, it is possible to readily obtain a larger number of feature quantities as compared to the case where the frequency spectrum is not divided. Since the larger number of feature quantities are obtained, it is possible to more clearly identify an audio signal.

Further, in the case where the band extracting section extracts frequency bands such that a prescribed space is generated between adjacent frequency bands extracted, improved robustness can be achieved against changes in the audio signal due to processing and/or external noise.

Furthermore, in the case where a time variation quantity (e.g., a time variation quantity of a peak frequency or a time variation quantity of an effective value) is used as the feature quantity, improved robustness can be achieved against variation of the audio signal on the time axis.

Further still, in the case where a quantity related to variation between frequency bands obtained by dividing a frequency spectrum is used as the feature quantity, improved robustness can be achieved against variation of the audio signal on a frequency axis.

In the second aspect, a quantity related to time variation is used as the feature quantity, thereby achieving improved robustness against variation of the audio signal on the time axis.

In the third aspect, an extremum of an envelope curve of a frequency spectrum is used as the feature quantity, and therefore it is made possible to readily calculate the feature quantity. In the case where a space ratio between extremum frequencies is used as the feature quantity, it is possible to achieve improved robustness in performing processing on the audio signal for changing the tempo thereof.

Further, by representing the feature quantity by a binary value, it is made possible to reduce the amount of data of the feature quantity. Thus, in an apparatus which uses the feature quantity as an acoustic fingerprint to perform music search or the like, it is possible to reduce the amount of data required to be stored. Moreover, a process for comparing the acoustic fingerprint with another acoustic fingerprint can be simplified.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is a block diagram illustrating a structure of a feature quantity extracting apparatus according to a first embodiment;
FIG. 2 is a graph used for explaining an example of dividing a frequency spectrum into a plurality of frequency bands;
FIG. 3 is a graph illustrating an example of band spectra extracted by a band extracting section 12;
FIG. 4 is a graph illustrating an example of discretely dividing a frequency spectrum;
FIG. 5 is a graph used for explaining how to calculate a peak value;
FIG. 6 is a block diagram illustrating a structure of a feature quantity calculating section 13 in the case of calculating a time variation in a peak frequency;
FIG. 7 is a block diagram illustrating a structure of the feature quantity calculating section 13 in the case of calculating a differential value of a peak frequency between frequency bands;
FIG. 8 is a block diagram illustrating a structure of the feature quantity calculating section 13 in the case of calculating a time variation in an effective value;
FIG. 9 is a block diagram illustrating a structure of the feature quantity calculating section 13 in the case of calculating a cross-correlation value;
FIG. 10 is a diagram illustrating a structure of the feature quantity calculating section 13 in the case of calculating a time variation in a cross-correlation value;
FIG. 11 is a block diagram illustrating a structure of a feature quantity extracting apparatus according to a second embodiment;
FIG. 12 is a diagram used for explaining a method for calculating a feature quantity in accordance with the second embodiment;
FIG. 13 is a block diagram illustrating a structure of the feature quantity calculating section 113 in the case of calculating a time variation in a cross-correlation value as a feature quantity;
FIG. 14 is a block diagram illustrating a structure of the feature quantity extracting apparatus according to the third embodiment;
FIG. 15 is a graph used for explaining a method for obtaining an extremum frequency from an envelope signal;
FIG. 16 is another graph used for explaining a method for obtaining an extremum frequency from an envelope signal;
FIG. 17 is a block diagram illustrating a structure of a feature quantity calculating section 143 in the case of calculating a space ratio between extremum frequencies as a feature quantity;
FIG. 18 is a graph used for explaining a method for calculating spaces between extremum frequencies;
FIG. 19 is a diagram illustrating a structure of a system including a program recording apparatus according to a fourth embodiment;
FIG. 20 is a block diagram illustrating a detailed structure of the program recording apparatus according to the fourth embodiment;
FIG. 21 is a diagram illustrating a structure of a system including a program recording apparatus according to a fifth embodiment;
FIG. 22 is a diagram illustrating exemplary timer recording information;
FIG. 23 is a diagram illustrating a detailed structure of the program recording apparatus according to the fifth embodiment;
FIG. 24 is a flowchart illustrating a process flow of the program recording apparatus according to the fifth embodiment.
FIG. 25 is a diagram illustrating a structure of a system including a program recording apparatus according to a sixth embodiment;
FIG. 26 is a diagram illustrating a structure of a system including a program reproduction control apparatus according to a seventh embodiment.
FIG. 27 is a diagram illustrating a structure of a system including a program editing apparatus according to an eighth embodiment;
FIG. 28 is a block diagram used for explaining the course of accumulating acoustic fingerprint information in a conventional acoustic fingerprint technology; and
FIG. 29 is a block diagram used for explaining the course of specifying an audio signal using an acoustic fingerprint.

### DESCRIPTION OF THE PREFERRED EMBODIMENTS

### (First Embodiment)

A feature quantity extracting apparatus according to a first embodiment of the present invention will now be described. In the first embodiment, frequency spectra of a plurality of frequency bands are extracted from an audio signal, and then a feature quantity is obtained from each of the extracted frequency spectra of the plurality of frequency bands.

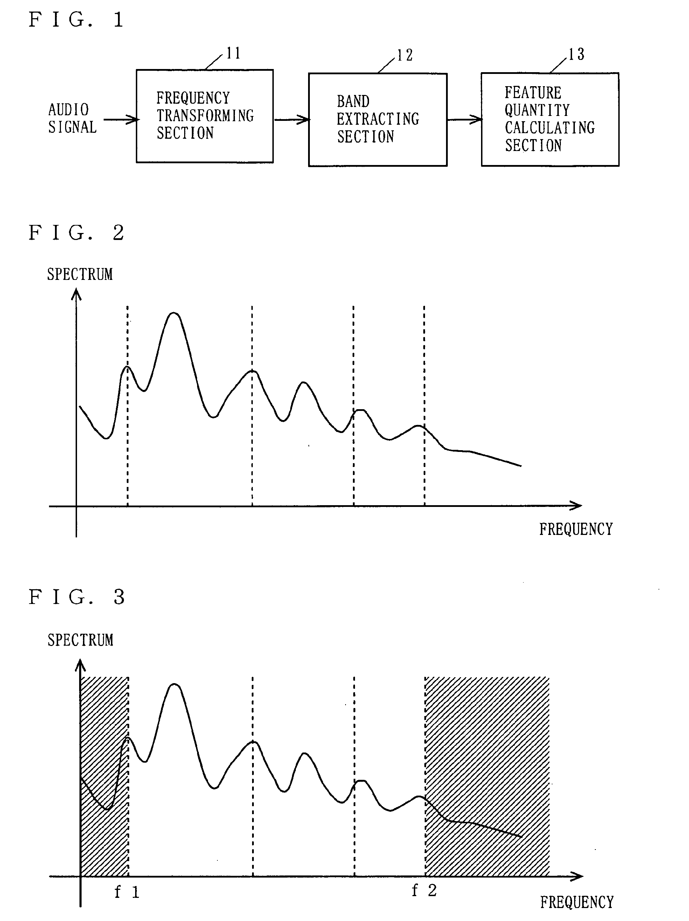

FIG. 1 is a block diagram illustrating a structure of the feature quantity extracting apparatus according to the first embodiment. In FIG. 1, the feature quantity extracting apparatus includes a frequency transforming section 11, a band extracting section 12, and a feature quantity calculating section 13. The frequency transforming section 11 receives an audio signal from which a feature quantity is extracted. The frequency transforming section 11 performs a frequency transform on signal portions each corresponding to a prescribed time length which are contained in the received audio signal, thereby deriving frequency spectra of the signal portions. Specifically, the frequency transforming section 11 divides the received audio signal by time, and derives a frequency spectrum for each signal portion obtained via division by time. The band extracting section 12 extracts a plurality of frequency bands from each frequency spectrum derived by the frequency transforming section 11. Specifically, the band extracting section 12 divides a frequency spectrum by frequency for each signal portion obtained by dividing the audio signal by time, and extracts part or all the frequency bands obtained via division by frequency. The feature quantity calculating section 13 performs a prescribed calculation related to each frequency spectrum of the frequency bands extracted by the band extracting section 12, and calculation results are obtained as feature quantities of the audio signal (information for identifying the audio signal, i.e., acoustic fingerprint). Hereinbelow, an operation of the feature quantity extracting apparatus according to the first embodiment will be described.

In FIG. 1, when the frequency transforming section 11 receives an audio signal from which a feature quantity is extracted, the frequency transforming section 11 performs a frequency transform on the audio signal, thereby deriving a frequency spectrum therefrom. For example, the frequency transform is performed based on a fast Fourier transform. In the fast Fourier transform, calculation is performed using a finite number of sample points extracted from the audio signal, and therefore, before performing a calculation process, the frequency transforming section 11 cuts, from the audio signal, a signal portion corresponding to a time length which corresponds to the number of sample points required for the fast Fourier transform. Note that the frequency transforming section 11 may cut one or more signal portions from the audio signal. In the case where a plurality of signal portions are cut from the audio signal, such cutting may or may not be performed such that adjacent signal portions obtained by cutting overlap each other on the time axis. A frequency transform is performed on each of the signal portions obtained by cutting, thereby deriving a frequency spectrum therefrom. The frequency spectra derived by the frequency transforming section 11 is outputted to the band extracting section 12. In the case where the plurality of signal portions are cut from the audio signal, the frequency spectra is outputted in the order starting from the frequency spectrum of the first signal portion among the plurality of signal portions having been cut from the audio signal.

The band extracting section 12 divides each of the frequency spectra outputted by the frequency transforming section 11 into a plurality of frequency bands. FIG. 2 is a graph used for explaining an example of dividing a frequency spectrum into a plurality of frequency bands. In the example shown in FIG. 2, the frequency spectrum is divided into five frequency bands by four dotted lines. The band extracting section 12 further extracts frequency spectra from the plurality of frequency bands. Herein, such a frequency spectrum extracted from each of the plurality of frequency bands is referred to as the "band spectrum". The band extracting section 12 extracts portions (band spectra) on the same frequency band from respective frequency spectra of the signal portions sequentially outputted by the frequency transforming section 11. The plurality of extracted band spectra are outputted to the feature quantity calculating section 13. In the case where a plurality of signal portions are cut from the audio signal, the band extracting section 12 outputs band spectra in units per frequency spectrum. That is, upon each receipt of a frequency spectrum, the band extracting section 12 outputs a plurality of band spectra extracted therefrom.

Among division methods which can be applied for the band extracting section 12, a method for dividing a frequency at uniform intervals on a linear scale is the simplest and most efficient. In the case of taking account of properties, such as the balance of musical tones, it is conceivable to employ a division method for dividing the frequency at uniform intervals on a logarithmic scale. In addition to the above-described methods, any other division methods can be applied for the band extracting section 12.

The band extracting section 12 may select a specific frequency band from among frequency bands as shown in FIG. 2, which have been obtained via division by an arbitrary method, and may obtain feature quantities from the selected frequency band. FIG. 3 is a graph illustrating an example of band spectra extracted by the band extracting section 12. In the example shown in FIG. 3, only the band spectra included in frequency bands, which are higher than a frequency f1 and lower than a frequency f2, are extracted. In this case, feature quantities are not obtained from the band spectra in the hatched areas shown in FIG. 3, i.e., band spectra included in a frequency band lower than the frequency f1 or higher than the frequency f2. For example, regarding an audio signal encoded using a compression technique, such as MP3, processing is performed so as to delete information in a high frequency band which is not audible to a human because of human audibility. Accordingly, in the case of extracting feature quantities from an audio signal on which such deletion has been performed, feature quantities in a high frequency band, where information has been deleted, cannot function as acoustic fingerprints, and therefore, as can be seen from FIG. 3, a band spectrum in the high frequency band from which feature quantities are highly likely to be deleted is excluded from candidates for feature quantities, thereby eliminating an unnecessary attempt from the process of obtaining feature quantities. That is, only a small amount of calculation makes it possible to extract only feature quantities effective for specifying an audio signal. Moreover, it is also possible to reduce the amount of data of the feature quantities.

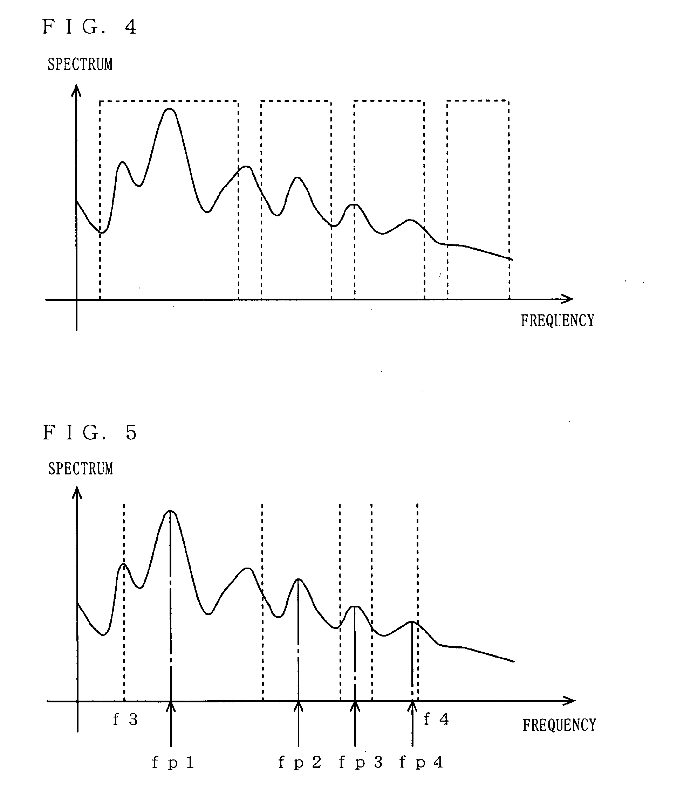

The bandwidth extracting section 12 may discretely divide a frequency spectrum into frequency bands such that adjacent frequency bands do not border or overlap each other. FIG. 4 is a graph illustrating an example of discretely dividing a frequency spectrum. As illustrated in FIG. 4, in the case where the frequency spectrum is discretely divided, there is a space generated between adjacent band spectra extracted by the band extracting section 12 . Therefore, even when the audio signal is changed by any factor (e.g., when the audio signal is processed or when external noise is mixed into the audio signal) , the audio signal can be accurately identified. That is, by discretely dividing the frequency spectrum, it is made possible to achieve improved robustness against the change of the audio signal due to processing and/or external noise. The following is the detailed description as to how the improved robustness is achieved.

In the case where the audio signal is changed by noise or the like, distortion or deviation is generated in the frequency spectrum outputted by the frequency transforming section 11. As a result, there arises a possibility that a value to be obtained as a feature quantity might significantly vary. For example, in the division method as described in conjunction with FIG. 2 (the method which does not perform discrete division) , if information to be obtained as a feature quantity is present in the vicinity of a border of division, there is a possibility that the distortion or deviation generated in the frequency spectrum might influence not only the frequency band in which the distortion or deviation is present but also frequency bands adjacent thereto. Specifically, consider a case where a frequency which is at a peak value of a band spectrum (hereinafter, referred to as the "peak frequency") is used as a feature quantity, and the peak frequency is changed due to a change of the audio signal. In this case, the change of the audio signal shifts the peak frequency from the present frequency band to another frequency band adjacent thereto. As a result, feature quantities are changed in two adjacent frequency bands. That is, the feature quantity to be extracted significantlyvaries . On the other hand, in the case where discrete division is performed as in the case of FIG. 4, even if the peak frequency is changed, such a change of the peak frequency does not influence two adjacent frequency bands. Accordingly, by performing discrete division, it is made possible to eliminate slight variation in feature quantity due to the change of the audio signal, thereby achieving improved robustness in extracting the feature quantity.

As described above, by dividing the frequency spectrum into a plurality of band spectra, it is made possible to extract a larger number of feature quantities with a small amount of calculation as compared to the case where the frequency spectrum is not divided. Consequently, the larger number of feature quantities lead to the generation of a more accurate acoustic fingerprint. Moreover, by using the plurality of band spectra to obtain the feature quantities, it is made possible to use additional new feature quantities as new acoustic fingerprints.

Next, an operation of the feature quantity calculating section 13 is described in detail. Described below are specific exemplary cases where the peak frequency, a time variation quantity of the peak frequency, a value of difference in peak frequency between frequency bands, an effective value, a time variation quantity of the effective value, a cross-correlation value, and a time variation quantity of the cross-correlation value are calculated as feature quantities.

First, a case where the feature quantity is the peak frequency is described. FIG. 5 is a graph used for explaining how to calculate a peak value. As described above, the peak frequency refers to a frequency at a peak value in a band spectrum. In FIG. 5, there are four peak frequencies fp₁ to fp₄. Note that in FIG. 5, neither a frequency band lower than the frequency f₃ nor a frequency band higher than the frequency f₄ is extracted as a band spectrum. The feature quantity calculating section 13 calculates the peak frequency as a feature quantity for each band spectrum. Specifically, when the band spectra extracted by the band extracting section 12 are inputted to the feature quantity calculating section 13, the feature quantity calculating section 13 finds a frequency corresponding to a largest value of a spectrum for each of the frequency bands obtained by division. The frequency corresponding to the largest value of the spectrum is determined as being the peak frequency in each of the frequency bands. In this manner, the peak frequencies are readily detected. Moreover, the peak frequencies can be extracted as feature quantities which enable the audio signal to become sufficiently distinguishable from a different audio signal.

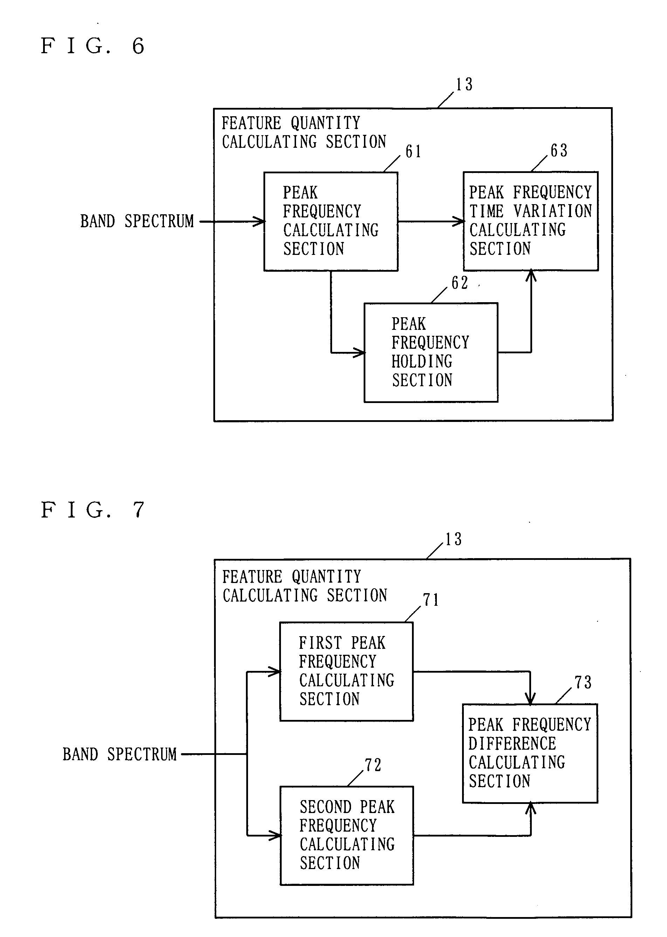

Next, a case where the feature quantity is the time variation quantity of the peak frequency is described. FIG. 6 is a block diagram illustrating a structure of the feature quantity calculating section 13 in the case of calculating the time variation quantity of the peak frequency. In FIG. 6, the feature quantity calculating section 13 includes a peak frequency calculating section 61, a peak frequency holding section 62, and a peak frequency time variation calculating section 63. The peak frequency calculating section 61 obtains a peak frequency from a bandwidth spectrum received. The method for obtaining the peak frequency has already been described above. The peak frequency is obtained from each band spectrum received. Each peak frequency obtained is outputted to the peak frequency holding section 62 and the peak frequency time variation calculating section 63.

The peak frequency holding section 62 holds the peak frequency outputted by the peak frequency calculating section 61 for a prescribed time period. The prescribed time period spans from a time point at which the band extracting section 12 outputs band spectra extracted from a frequency spectrum of a given signal portion to a time point at which the band extracting section 12 outputs band spectra extracted from a frequency spectrum of the next signal portion. After a lapse of the prescribed time period, the peak frequency holding section 62 outputs peak frequencies held therein to the peak frequency time variation calculating section 63.

The peak frequency time variation calculating section 63 calculates the value of difference between a peak frequency outputted by the peak frequency calculating section 61 and a peak frequency outputted by the peak frequency holding section 62. The value of difference is calculated from two peak frequencies on the same frequency band in different band spectra. The calculation of the value of difference is performed with respect to each band spectrum. The value of difference calculated for each band spectrum is used as the feature quantity.

Note that in the case where the feature quantity is the time variation quantity of the peak frequency, the peak frequency holding section 62 may hold the peak frequency for a time period which is an integral multiplication of the prescribed time period.

The peak frequency time variation calculating section 63 may represent the value of difference by a binary value. For example, the value of difference may be represented as a binary value which takes 1 if the sign of the differential value is positive, and 2 if negative. In this case, the feature quantity represented by the binary value indicates an increment or decrement on the time axis of the peak frequency. Alternatively, the differential value may be represented by a binary value which takes 1 if the magnitude of the differential value exceeds a prescribed threshold value, and takes 2 otherwise, for example. In this case, the feature quantity represented by the binary value indicates that the peak frequency has undergone variation on the time axis or substantially no variation. By representing the value of difference, which is the feature quantity, by the binary value, it is made possible to reduce the amount of data of the feature quantity. Especially, in the first embodiment, the number of feature quantities becomes large by dividing a frequency band as compared to the case where no frequency bands are divided. Therefore, it is effective to reduce the amount of data by representing the feature quantity by the binary value.

As described above, by obtaining the time variation quantity of the peak frequency as the feature quantity, it is made possible to readily calculate the feature quantity. Further, by obtaining the quantity related to a time variation as the feature quantity, it is made possible to achieve improved robustness against variation of the audio signal on the time axis.

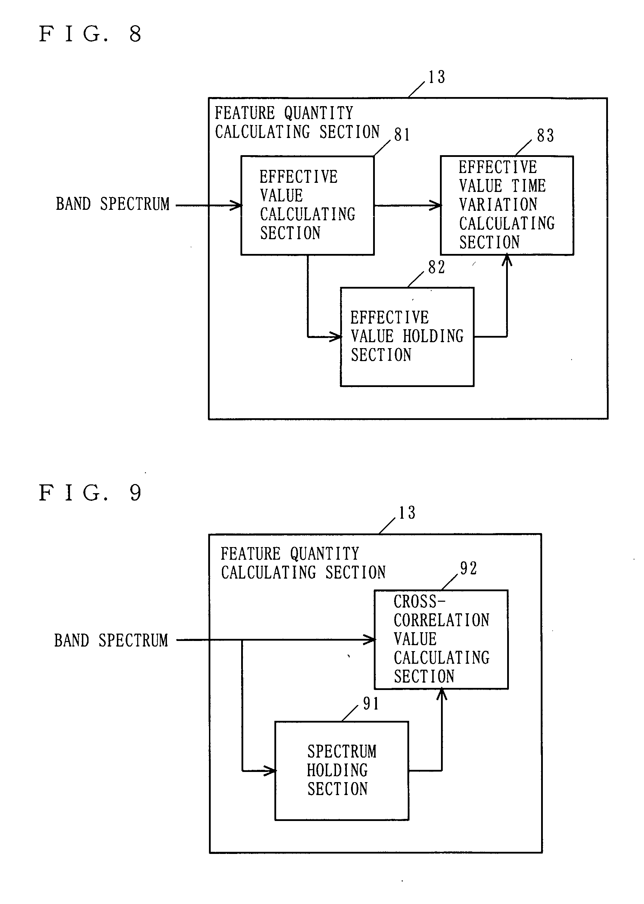

Next, a case where the feature quantity is the value of difference in peak frequency between frequency bands. FIG. 7 is a block diagram illustrating a structure of the feature quantity calculating section 13 in the case of calculating the value of difference in peak frequency between frequency bands. In FIG. 7, the feature quantity calculating section 13 includes a first peak frequency calculating section 71, a second peak frequency calculating section 72, and a peak frequency difference calculating section 73. The first peak frequency calculating section 71 obtains a peak frequency from a band spectrum received. The method for obtaining the peak frequency has already been described above. The peak frequency is obtained from each band spectrum received. Each peak frequency obtained is outputted to the peak frequency difference calculating section 73.

The second peak frequency calculating section 72 performs a process similar to the process performed by the first peak frequency calculating section 71. The peak frequency difference calculating section 73 calculates the value of difference between a peak frequency outputted by the first peak frequency calculating section 71 and a peak frequency outputted by the second peak frequency calculating section 72. The value of difference is calculated from two peak frequencies obtained from band spectra of two adjacent bands. For example, calculation is made with respect to the value of difference between a given peak frequency and a peak frequency obtained from a band spectrum which is adjacent to a band spectrum from which the given peak frequency has been obtained, at the side of a frequency higher than the given peak frequency. The calculation of the value of difference is performed with respect to each band spectrum. The value of difference calculated for each band spectrum is used as the feature quantity.

In this manner, by obtaining the value of difference in peak frequency between frequency bands as the featured quantity, it is made possible to readily calculate the feature quantity. Moreover, by obtaining the quantity related to a variation between frequency bands as the feature quantity, it is made possible to achieve improved robustness against variation of the audio signal on a frequency axis.

As in the case of the time variation quantity, the value of difference between frequency bands may be represented by a binary value. By representing the values of difference, which is a feature quantity, by a binary value, it is made possible to reduce the amount of data of the feature quantity.

In the present embodiment, two frequency bands from which the value of difference in peak frequency is calculated are not limitedly required to be adjacent to each other. Any two frequency bands selected from among a plurality of frequency bands extracted by the band extracting section 12 may be used.

Next, a cases where the feature quantity is the effective value is described. In this case, the feature quantity calculating section 13 calculates an effective value, i.e., a root-mean-square (RMS) value, of each band spectrum received, and outputs the calculated effective value as a feature quantity. By obtaining the effective value as the feature quantity, it is made possible to readily calculate the feature quantity which enables the audio signal to become sufficiently distinguishable from another audio signal.

Next, a case where the feature quantity is the time variation quantity of the effective value is described. FIG. 8 is a block diagram illustrating a structure of the feature quantity calculating section 13 in the case of calculating the time variation quantity of the effective value. In FIG. 8, the feature quantity calculating section 13 includes an effective value calculating section 81, an effective value holding section 82, and an effective value time variation calculating section 83. The effective value calculating section 81 obtains an effective value from a band spectrum received. The process performed by the effective value calculating section 81 is similar to the process performed by the peak frequency calculating section 61 except that the effective value calculating section 81 calculates the effective value, rather than the peak frequency. Each effective value calculated is outputted to the effective value holding section 82 and the effective value time variation calculating section 83. The process performed by the effective value holding section 82 and the process performed by the effective value time variation calculating section 83 are respectively similar to the process performed by the peak frequency holding section 62 and the process performed by the peak frequency time variation calculating section 63, except that each of the effective value holding section 82 and the effective value time variation calculating section 83 calculates the effective value, rather than the peak frequency. As in the case of using the value of difference between peak frequencies as the feature quantity, the time variation quantity of the effective value may be represented by a binary value.

In this manner, by obtaining the effective value as the feature quantity, it is made possible to readily calculate the feature quantity. Further, by obtaining the quantity related to a time variation as the feature quantity, it is made possible to achieve improved robustness against variation of the audio signal on the time axis.

Next, a case where the feature quantity is the cross-correlation value is described. FIG. 9 is a block diagram illustrating a structure of the feature quantity calculating section 13 in the case of calculating the cross-correlation value. In FIG. 9, the feature quantity calculating section 13 includes a spectrum holding section 91, and a cross-correlation value calculating section 92.

The spectrum holding section 91 holds each band spectrum outputted by the band extracting section 12 for a prescribed time period. The prescribed time period spans from a time point at which the band extracting section 12 outputs band spectra extracted from a frequency spectrum of a given signal portion to a time point at which the band extracting section 12 outputs band spectra extracted from a frequency spectrum of the next signal portion. After a lapse of the prescribed time period, the spectrum holding section 91 outputs peak frequencies held therein to the cross-correlation value calculating section 92.

The cross-correlation value calculating section 92 calculates a cross-correlation value between a band spectrum outputted by the band extracting section 12 and a band spectrum outputted by the spectrum holding section 91. The cross-correlation value is calculated from frequency spectra on the same frequency bands. The calculation of the cross-correlation value is performed with respect to each band spectrum. Each cross-correlation value calculated is used as the feature quantity.

The cross-correlation value calculating section 92 may represent the cross-correlation value as a binary value. For example, the cross-correlation value is represented by a binary value which takes 1 if the sign of the cross-correlation value is positive, and 2 if negative. This reduces the amount of data of the feature quantity.

In this manner, by obtaining the cross-correlation value as the feature quantity, it is made possible to readily calculate the feature quantity. Further, by obtaining the quantity related to a time variation as the feature quantity, it is made possible to achieve improved robustness against variation of the audio signal on the time axis.

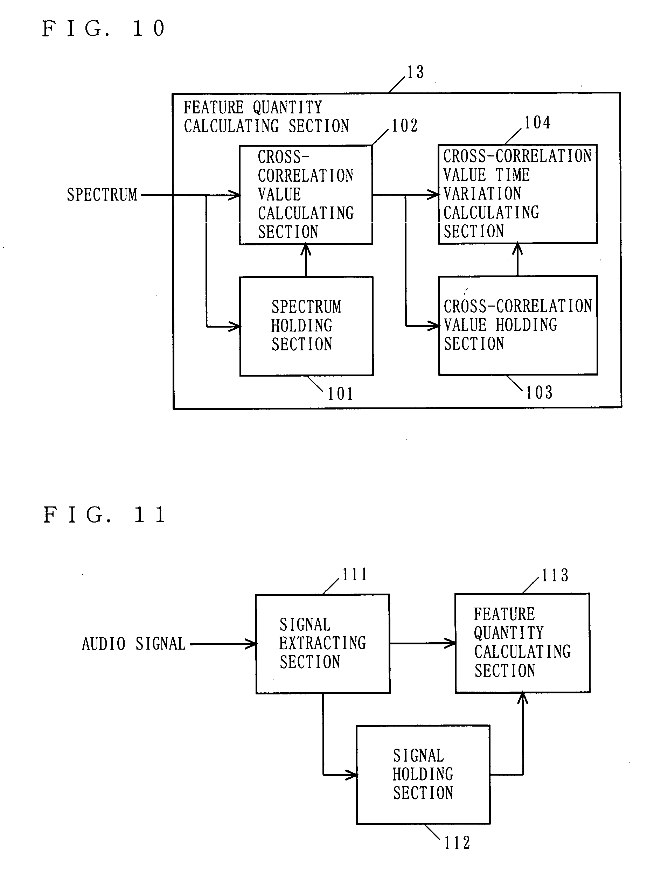

Next, a case where the feature quantity is the time variation quantity of the cross-correlation value is described. FIG. 10 is a diagram illustrating a structure of the feature quantity calculating section 13 in the case of calculating the time variation quantity of the cross-correlation value. In FIG. 10, the feature quantity calculating section 13 includes a spectrum holding section 101, a cross-correlation value calculating section 102, a cross-correlation value holding section 103, and a cross-correlation value time variation calculating section 104.

The process performed by the spectrum holding section 101 and the process performed by the cross-correlation value calculating section 102 are respectively similar to the process performed by the spectrum holding section 91 and the process performed by the cross-correlation value calculating section 92. Each cross-correlation value obtained is outputted to each of the cross-correlation holding section 103 and the cross-correlation value time variation calculating section 104. The process performed by the cross-correlation value holding section 103 is similar to the process performed by the peak frequency holding section 62, except that the cross-correlation value holding section 103 holds the effective value, rather than the peak frequency. The process per formed by the cross-correlation value time variation calculating section 104 is similar to the process performed by the peak frequency time variation calculating section 63, except that the cross-correlation time variation calculating section 104 calculates the cross-correlation value, rather than the peak frequency. As in the case of using the value of difference between peak frequencies as the feature quantity, the value of difference may be represented by a binary value.

In this manner, by obtaining the time variation quantity of the cross-correlation value as the feature quantity, it is made possible to readily calculate the feature quantity. Further, by obtaining the quantity related to a time variation as the feature amount, it is made possible to achieve improved robustness against variation of the audio signal on the time axis.

In addition to the above-described various types of values, it is also possible to used a value of difference in peak value between frequency bands as the feature quantity. Specifically, the feature quantity calculating, section 13 calculates a peak value for each band spectrum, and then calculates the value of difference in peak value between adjacent frequency bands, for example. The value of difference calculated may be used as the feature quantity. As in the case of the value of difference in peak frequency, the frequency bands from which the value of difference is calculated does not have to be adjacent to each other.

### (Second Embodiment)

A feature quantity extracting apparatus according to a second embodiment of the present invention will now be described. In the second embodiment, a plurality of signal portions corresponding to different time points are extracted from an audio signal, and a numerical value related to a cross-correlation value between signal portions extracted is used as the feature quantity. By obtaining such a numerical value as the feature quantity, it is made possible to achieve improved robustness in extracting the feature quantity.

FIG. 11 is a block diagram illustrating a structure of the feature quantity extracting apparatus according to the second embodiment. In FIG. 11, the feature quantity extracting apparatus includes a signal extracting section 111, a signal holding section 112, and a feature quantity calculating section 113. The signal extracting section 111 receives an audio signal from which a feature quantity is extracted. The signal extracting section 111 extracts, from the received audio signal, a plurality of signal portions each corresponding to a prescribed time length. The signal holding section 112 holds the signal portions extracted by the signal extracting section 111 for a prescribed time period, and then outputs the signal portions held therein to the feature quantity calculating section 113. The feature quantity calculating section 113 calculates a cross-correlation value between a signal portion extracted by the signal extracting section 111 and a signal portion outputted by the signal holding section 112 . Hereinbelow, an operation of the feature quantity extracting apparatus according to the second embodiment will be described in detail.

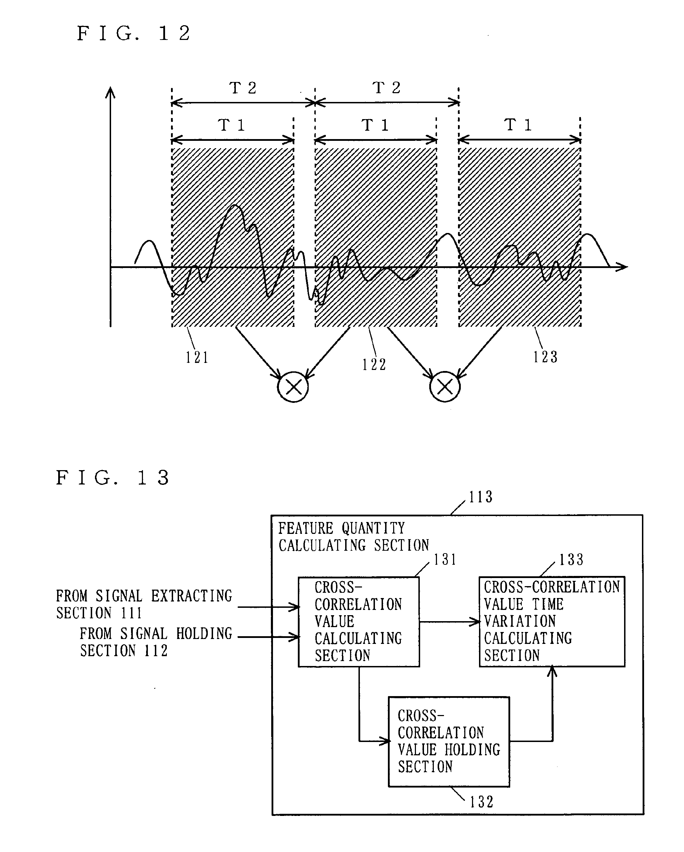

In FIG. 11, when the signal extracting section 111 receives an audio signal, the signal extracting section 111 extracts, from the received audio signal, a plurality of signal portions each corresponding to a prescribed time length. FIG. 12 is a diagram used for explaining a method for calculating the feature quantity in accordance with the second embodiment. In FIG. 12, hatched areas indicate the signal portions extracted by the signal extracting section 111. As can be seen from FIG. 12, each of the extracted signal portions corresponds to a prescribed time length T1. The prescribed time length is previously determined by the signal extracting section 111. The signal portions are extracted at intervals of a time period T2 of the audio signal on the time axis. Note that such extraction intervals are not intended to mean that the duration of a process for extracting a signal portion is the time period T2. The extracted signal portions are outputted to each of the signal holding section 112 and the feature quantity calculating section 113 in the order starting from the first signal portion among the signal portions extracted from the audio signal. Any method can be employed for extracting the signal portions so long as the extracted signal portions correspond to the same time length (in FIG. 12, T1). For example, in FIG. 12, although signal extraction is performed such that adjacent signal portions extracted do not overlap each other, the signal extraction may be performed so as to extract signal portions overlapping with each other. Also, in FIG. 12, although the signal extraction is performed such that the adjacent signal portions extracted have a space therebetween, the signal extraction may be performed so as not generate a space between the adjacent portions extracted.

The signal holding section 112 holds a signal portion outputted by the signal extracting section 111 for a prescribed time period. The prescribed time period spans from a time point at which the signal extracting section 111 outputs a given signal portion to a time point at which the signal extracting section 111 outputs the next signal portion. After a lapse of the prescribed time period, the signal holding section 112 outputs a signal portion held therein to the feature amount calculating section 113. That is, the signal holding portion section 112 outputs a signal portion which has been outputted by the signal extracting section 111 a time period T1 ahead of a signal portion currently being outputted. For example, in FIG. 12, at a time point when the signal extracting section 111 outputs a signal portion 122, the signal holding section 112 outputs a signal portion 121; and at a time point when the signal extracting section 111 outputs a signal portion 123, the signal holding section 112 outputs the signal portion 122.

The feature quantity calculating section 113 calculates a cross-correlation value between a signal portion outputted by the signal extracting section 111 and a signal portion outputted by the signal holding section 112. For example, in FIG. 12, the feature quantity calculating section 113 calculates a cross-correlation value between the signal portion 121 and the signal portion 122, and a cross-correlation value between the signal portion 122 and the signal portion 123. In the second embodiment, a numerical value related to a cross-correlation value is used as the feature quantity. For example, the feature quantity may be the cross-correlation value itself or a time variation quantity of the cross-correlation value. Described below are a case where the feature quantity is a cross-correlation value, and a case where the feature quantity is a time variation quantity of the cross-correlation value.

First, the case where the feature quantity is the cross-correlation value is described. In this case, the feature quantity calculating section 113 obtains the cross-correlation value itself as the feature quantity. In the example of FIG. 12, for each signal portion extracted by the signal extracting section 111, a cross-correlation value between the signal portion and the next signal portion (a signal portion included at a time point after a time period T2 from the signal portion in the same audio signal) is calculated as the feature quantity. Note that the feature quantity extracting section 113 may calculate a binary value, which indicates the sign of the cross-correlation value, as the feature quantity.

Next, the case where the feature quantity is the time variation quantity of the cross-correlation value is described. FIG. 13 is a block diagram illustrating a structure of the feature quantity calculating section 113 in the case of calculating the time variation quantity of the cross-correlation value as the feature quantity. In FIG. 13, the feature quantity calculating section 113 includes a cross-correlation value calculating section 131, a cross-correlation holding section 132, and a cross-correlation time variation calculating section 133.

The cross-correlation calculating section 131 receives two signal portions respectively outputted by the signal extracting section 111 and the signal holding section 112, and calculates a cross-correlation value between the two signal portions received. The calculated cross-correlation value is outputted to each of the cross-correlation holding section 132 and the cross-correlation value time variation calculating section 133.

The cross-correlation value holding section 132 holds the cross-correlation value outputted by the cross-correlation value calculating section 131 for a prescribed time period. The prescribed time period spans from a time point at which the cross-correlation value calculating section 131 outputs a given cross-correlation value to a time point at which the cross-correlation value calculating section 131 outputs the next cross-correlation value. After a lapse of the prescribed time period, the cross-correlation value holding section 132 outputs the cross-correlation value held therein to the cross-correlation value time variation calculating section 133. That is, the cross-correlation value holding section 132 outputs a cross-correlation value which has been outputted by the cross-correlation value calculating section 131 immediately before the cross-correlation value currently being outputted by the cross-correlation value calculating section 131.

The cross-correlation value time variation calculating section 133 calculates; as the feature quantity, a value of difference obtained by subtracting the cross-correlation value outputted by the cross-correlation value holding section 131 from the cross-correlation value outputted by the cross-correlation calculating section 132. The value of difference indicates a time variation quantity of the cross-correlation value. Note that the cross-correlation value time variation calculating section 133 may obtain a binary value, which indicates the sign of the time variation in the cross-correlation value, as the feature quantity.

As described above, in the second embodiment, a numerical value related to a cross-correlation value between two signal portions at two different time points is used as the feature quantity. By obtaining the numerical value related to the cross-correlation value as the feature quantity, it is made possible to readily calculate the feature quantity. Further, by obtaining a quantity related to a time variation as the feature quantity, it is made possible to achieve improved robustness against variation of the audio signal on the time axis.

In the second embodiment, the cross-correlation value between a given signal portion and a signal portion adjacent thereto is calculated. Specifically, as shown in FIG. 12, the cross-correlation value between the signal portion 121 and the next signal portion 122 is calculated. In other embodiments, the cross-correlation value does not have to be obtained from two adjacent signal portions. For example, the cross-correlation value may be obtained from a given signal portion and the second signal portion from the given signal portion. For example, in FIG. 12, a cross-correlation value between the signal portion 121 and the signal portion 123 may be calculated.

### (Third Embodiment)

A feature quantity extracting apparatus according to a third embodiment of the present invention will now be described. In the third embodiment, a frequency spectrum is derived from an audio signal, and an envelope signal is further derived from the frequency spectrum. A frequency corresponding to an extremum of the envelope signal or a numerical value related to the frequency is calculated as the feature quantity. By obtaining such an extremum or a numerical value as the feature quantity, it is made possible to achieve improved robustness in extracting the feature quantity.

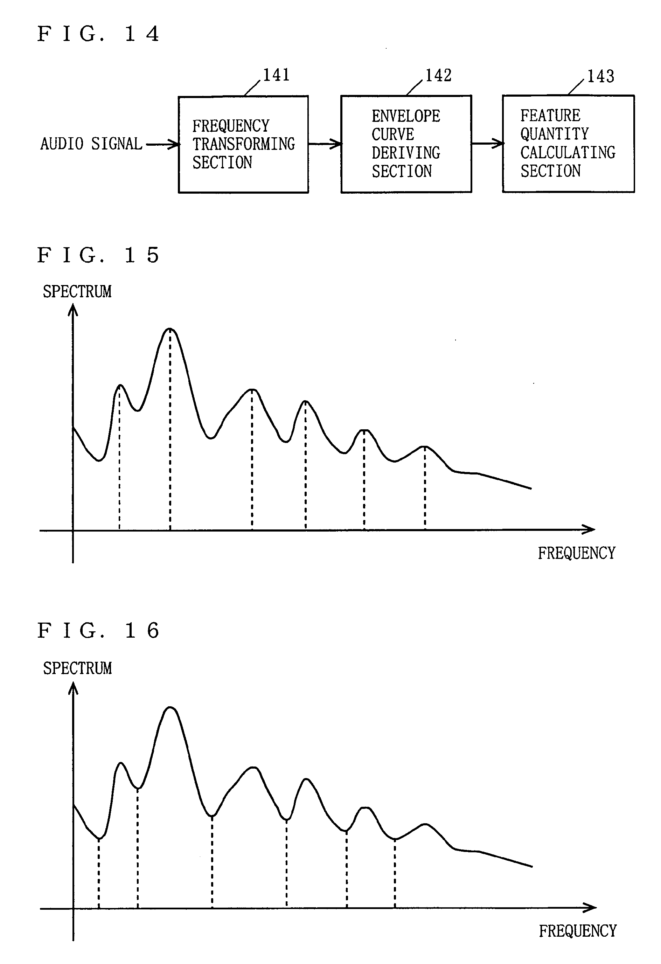

FIG. 14 is a block diagram illustrating a structure of the feature quantity extracting apparatus according to the third embodiment. In FIG. 14, the feature quantity extracting apparatus includes a frequency transforming section 141, an envelope curve deriving section 142, and a feature quantity calculating section 143. The frequency transforming section 141 operates in a manner similar to the frequency transforming section 1 illustrated in FIG. 1. The envelope curve deriving section 142 derives an envelope signal which represents an envelope curve of a frequency spectrum outputted by the frequency transforming section 141. The feature quantity calculating section 143 calculates a frequency corresponding to an extremum of the envelope signal derived by the envelope curve deriving section 142 (hereinafter, such a frequency is referred to as the "extremum frequency"), and obtains a numerical value related to the extremum frequency as the feature quantity. Hereinbelow, an operation of the feature quantity extracting apparatus according to the third embodiment will be described in detail.

As described above, the frequency transforming section 141 illustrated in FIG. 14 operates in a manner similar to the frequency transforming section 1 illustrated in FIG. 1, and therefore the detailed description thereof is omitted. Upon receipt of a frequency spectrum of an audio signal outputted by the frequency transforming section 141, the envelope curve deriving section 142 detects an envelope curve of the frequency spectrum. By obtaining the envelope curve of the frequency spectrum, it is made possible to recognize gradual variation of a frequency domain of the audio signal. The envelope signal representing the envelope curve, which has been detected by the envelope curve deriving section 142, is outputted to the feature quantity calculating section 143.

The feature quantity calculating section 143 obtains the extremum frequency from the envelope signal outputted by the envelope curve deriving section 142, and obtains a numerical value related to the extremum frequency as the feature quantity of the audio signal. It is conceivable that in addition to the extremum frequency itself, a space ratio between extremum frequencies is used as the numerical value related to the extremum frequency, for example. Described below is the details of numerical value related to the extremum frequency calculated as the feature quantity.

FIGs. 15 and 16 are graphs used for explaining a method for obtaining the extremum frequency from the envelope signal. In the case of using the extremum frequency as the feature quantity, it is not necessary to use all the frequencies, which correspond to extremums of the envelope signal, as the feature quantity. For example, as can be seen from FIG. 15, only frequencies at local maximums of the envelope signal (hereinafter, referred to as the "local maximum frequencies") may be used as the feature quantity. Alternatively, as can be seen from FIG. 16, only frequencies at local minimums of the envelope signal (hereinafter, referred to as the "local minimum frequencies") may be used as the feature quantity.

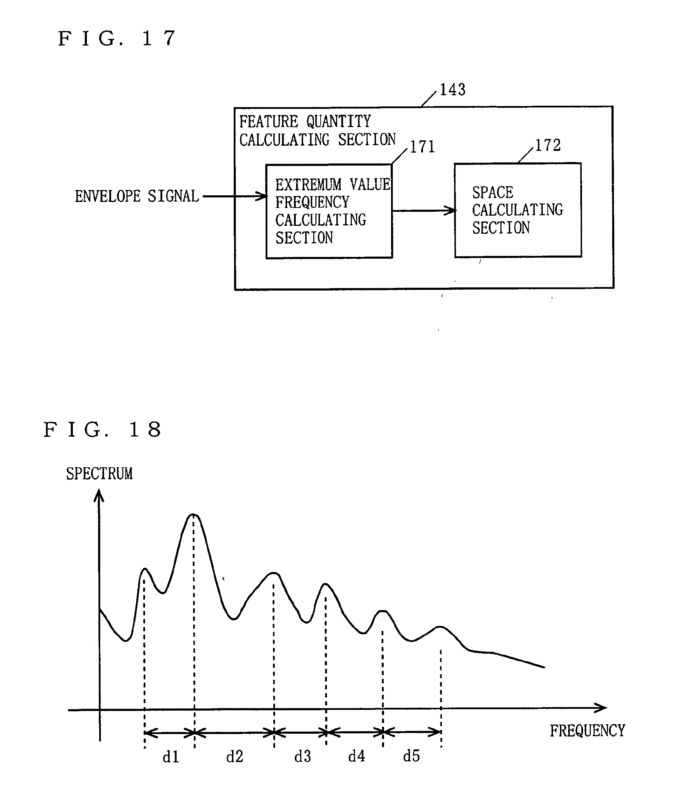

In the third embodiment, the feature quantity may be a space ratio between extremum frequencies. FIG. 17 is a block diagram illustrating a structure of the feature quantity calculating section 143 in the case of calculating the space ratio between extremum frequencies as the feature quantity. In FIG. 17, the feature quantity calculating section 143 includes an extremum frequency calculating section 171, and a space calculating section 172.

The extremum frequency calculating section 171 obtains extremum frequencies from the envelope signal outputted by the envelope curve deriving section 142. The extremum frequencies may include either the local maximum frequencies or the local minimum frequencies, or may include both of them. The extremum frequencies obtained by the extremum frequency calculating section 171 are outputted to the space calculating section 172.

The space calculating section 172 calculates spaces between the extremum frequencies. FIG. 18 is a graph used for explaining a method for calculating the spaces between the extremum frequencies. In the process of calculating the spaces between the extremum frequencies, the space calculating section 172 initially obtains a value of difference between each of the extremum frequencies and an extremum frequency adjacent thereto. In the example of FIG. 18, values of difference d₁ to d₅ are obtained. In the example of FIG. 18, the extremum frequency calculating section 171 obtains only local maximum frequencies as the extremum frequencies. The values of difference obtained by the space calculating section 172 may be used as feature quantities. In the third embodiment, the space calculating section 172 further calculates a ratio of each of the values of difference obtained to a prescribed reference value. The calculated ratios are used as space ratios between extremum frequencies, and thus used as feature quantities of the audio signal. Note that any value can be used as the reference value. For example, the reference value can be a value of the lowest of the extremum frequencies or a value of difference between the lowest extremum frequency and the second lowest extremum frequency.

As described above, in the third embodiment, by obtaining the extremum of an envelope curve of the frequency spectrum as the feature quantity, it is made possible to readily calculate the feature quantity. Moreover, in the case of using the space ratio between extremum frequencies as the feature quantity, for example, when processing the audio signal so as to change the tempo of music contained in the audio signal, improved robustness can be achieved.

### (Fourth Embodiment)

Described below is an example of application of a feature quantity extracting apparatus as described in the first through third embodiments. In a fourth embodiment of the present invention, a feature quantity extracting apparatus as described in the first through third embodiments is applied in a program recording apparatus for recording a television program. In the program recording apparatus, television programs are specified by music played therein, whereby it is possible to automatically record a desired television program.

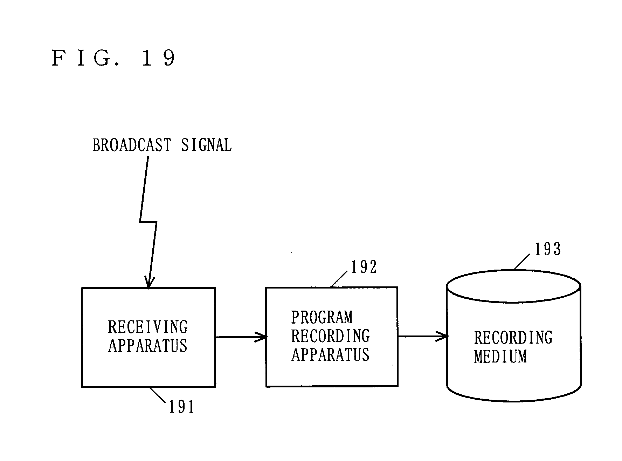

FIG. 19 is a diagram illustrating a structure of a system including the program recording apparatus according to the fourth embodiment. The system illustrated in FIG. 19 includes a receiving apparatus 191, a program recording apparatus 192, and a recording medium 193. For example, the receiving apparatus 191 is formed by an antenna, etc. , and is operable to receive a broadcast signal. The broadcast signal is transmitted by radio from a broadcasting station (not shown). Alternatively, the broadcast signal may be transmitted along lines such as cables or optical fibers. The broadcast signal received by the receiving apparatus 191 is outputted to the program recording apparatus 192. In accordance with music played in a television program desired to be recorded, the program recording apparatus 192 identifies the desired television program from among television programs contained in the broadcast signal, and then records the specified television program to the recording medium 193. For example, the recording medium 193 for recording the television program may be a magnetic tape, a recordable optical disc, such as a CD-R or a DVD-RAM, a hard disk drive, or a semiconductor memory. Hereinbelow, an operation of the program recording apparatus 192 will be described in detail.

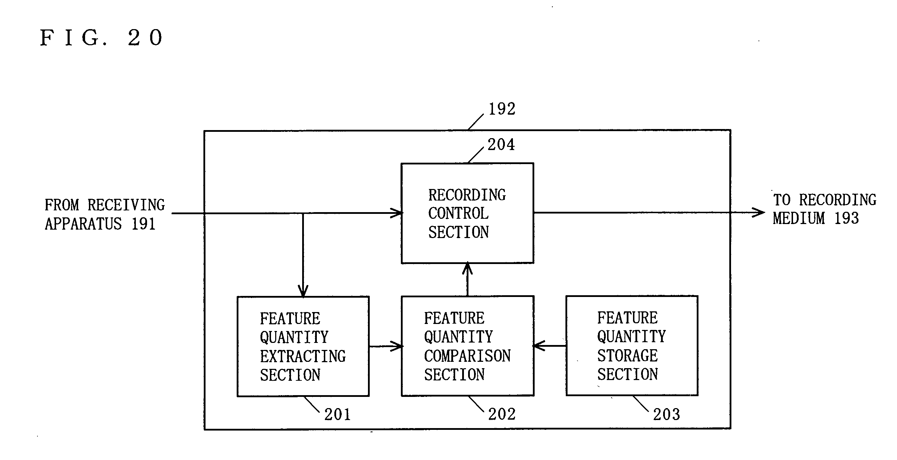

FIG. 20 is a block diagram illustrating a detailed structure of the program recording apparatus according to the fourth embodiment. In FIG. 20, the program recording apparatus 192 includes a feature quantity extracting section 201, a feature quantity comparison section 202, a feature quantity storage section 203, and a recording control section 204.

The broadcast signal outputted by the receiving apparatus 191 is inputted to each of the recording control section 204 and the feature quantity extracting section 201. The broadcast signal contains at least a video signal and an audio signal. The recording control section 204 receives both the video signal and the audio signal, while the feature quantity extracting section 201 receives only the audio signal contained in the broadcast signal. Alternatively, the feature quantity extracting section 201 itself may have a function of extracting the audio signal from the broadcast signal. The feature quantity extracting section 201 extracts a feature quantity from the audio signal. The feature quantity extracting section 201 is any one of the feature quantity extracting apparatuses according to the first through third embodiments, and therefore the feature quantity extracted by the feature quantity extracting section 201 is a numerical value as described in the first through third embodiments, e.g., a peak frequency, a cross-correlation value, etc. Since the method for extracting the feature quantity used in the feature quantity extracting section 201 is similar to that described in the first through third embodiments, detailed description thereof is omitted herein. The extracted feature quantity is outputted to the feature quantity comparison section 202.

The feature quantity storage section 203 previously stores feature quantities of an audio signal of music played in a television program to be recorded. For example, the feature quantity storage section 203 previously stores feature quantities of pieces of music played in the television program to be recorded, e.g., opening theme music,background music, program-ending music, etc. Any method can be used for acquiring feature quantities to be held in the feature quantity storage section 203, and specific acquisition methods will be described later in fifth and sixth embodiments.

The feature quantity storage section 203 stores information representing control instructions (hereinafter, referred to as the "control instruction information") as well as the feature quantities, such that the control instruction information is associated with the feature quantities. The control instructions as described herein refer to instructions to control operations of the recording control section 204. The contents of the control instruction information are typically a "start recording" and a "end recording". Upon receipt of the control instruction information representing the "start recording", the recording control section 204 starts a program recording. On the other hand, upon receipt of the control instruction information representing the "end recording", the recording control section 204 ends the program recording. The feature quantity storage section 203 has one or more pairs of the feature quantity and control instruction information stored therein.

For example, in the feature quantity storage section 203, the feature quantity of opening theme music played at the beginning of a television program is associated with the control instruction information representing the "start recording", and the feature quantity of program-ending music of the television program is associated with the control instruction information representing the "end recording" . Thus, it is possible to reliably detect the beginning and end of the television program. Moreover, in the case where commercials are broadcast during the television program, it is conceivable that the feature quantity of music played immediately before a commercial break is associated with the control instruction information representing the "end recording", and the feature quantity of music played at the restart of the television program after the commercial break is associated with the control instruction information representing the "start recording". Such association of the feature quantities is advantageous in that commercials are not unnecessarily recorded.

The feature quantity comparison section 202 compares a feature quantity extracted by the feature quantity extracting section 201 with a feature quantity stored in the feature quantity storage section 203, thereby determining whether these two feature quantities match with each other. Such determination is performed with respect to all the feature quantities stored in the feature quantity storage section 203. As a result of the determination, if two feature quantities match with each other, the feature quantity comparison section 202 outputs a piece of control instruction information to the recording control section 204 . The content of the control instruction information outputted to the recording control section 204 is decided based on the content of a corresponding piece of information stored in the feature quantity storage section 203. Specifically, the content of the control instruction information associated with a feature quantity stored in the feature quantity storage section 203 which has been determined as matching with the feature quantity is outputted to the recording control section 204. On the other hand, if it is determined that there is no matching between the above-described two feature quantity, the control instruction information is not outputted.

Note that the above-described comparison between the feature quantities may be performed for determining whether two feature quantities are similar to each other, instead of determining whether the two feature quantities match with each other.

The recording control section 204 operates in accordance with the control instruction information outputted by the feature quantity comparison section 202. For example, in the case of receiving the control instruction information representing the "start recording" from the feature comparison section 202, the recording section 204 accordingly starts program recording. On the other hand, in the case of receiving the control instruction information representing the "end recording" from the feature quantity comparison section 202, the recording control section 204 accordingly ends the program recording.

As described above, a feature quantity extracting apparatus as described in the third through fifth embodiments can be applied as the program recording apparatus. In such a program recording apparatus, it is not necessary to store data for music played in a television program, and only the feature quantity of such music is required to be stored. Thus, the program recording apparatus reduces the amount of data to be stored, as compared to the case of storing the data for music itself.

The program recording apparatus as described above is able to reliably record a television program, even if the air time of the television program is unexpectedly changed or extended. Further, as described above, it is also possible to record the television program without recording commercials. Furthermore, by previously storing the feature quantity of the user's favorite music into the feature quantity storage section, it is made possible to record only scenes during the television program in which the user's favorite music is played (e.g., in the case of a music show, it is possible to record only the user's favorite music).

### (Fifth Embodiment)

A fifth embodiment of the present invention will now be described. In the fifth embodiment, as in the case of the fourth embodiment, a feature quantity extracting apparatus as described in the first through third embodiments is applied in a program recording apparatus for recording a television program. Described herein is a method for acquiring data containing the correspondence between a feature quantity and control instruction information (hereinafter, such data is referred to as the "timer recording information" ) which is required by the program recording apparatus.

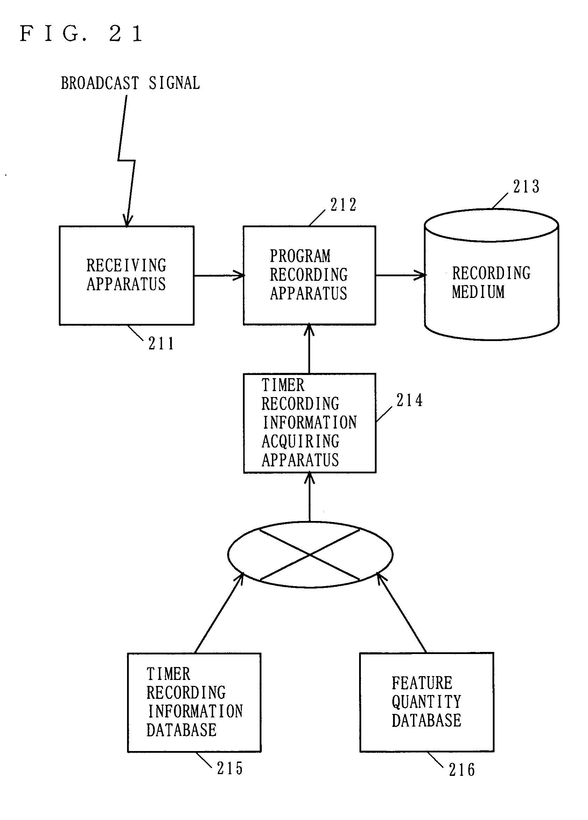

FIG. 21 is a diagram illustrating a structure of a system including the program recording apparatus according to the fifth embodiment. The system illustrated in FIG. 21 includes a receiving apparatus 211, a program recording apparatus 212, a recording medium 213, a timer recording information acquiring apparatus 214, a timer recording information database 215, and a feature quantity database 216. Note that the receiving apparatus 211 is the same as the receiving apparatus illustrated in FIG. 19, and the recording medium 213 is the same as the recording medium 193 illustrated in FIG. 19.

The program recording apparatus according to the fifth embodiment acquires timer recording information, which is required for performing a process for recording a television program, from the timer recording information database 215 via the timer recording information acquiring apparatus 214. As described above, the timer recording information contains the correspondence between a feature quantity and control instruction information. In addition to the correspondence, the timer recording information may contain information related to a television program.

The timer recording information acquiring apparatus 214 is, for example, a personal computer connected to a network. The user uses the timer recording information acquiring apparatus 214 to acquire timer recording information for a television program desired to record from the timer recording information database 215. Specifically, in accordance with the user's input, the timer recording information acquiring apparatus 214 transmits to the timer recording information database 215 via the network a request to acquire information for identifying the television program the user desires to record and timer recording information of the same television program. Upon receipt of the request from the timer recording information acquiring apparatus 214, the timer recording information database 215 transmits the timer recording information of the television program to the timer recording information acquiring apparatus 214. Thus, the timer recording information acquiring apparatus 214 acquires the timer recording information of the television program to be recorded. The timer recording information acquiring apparatus 214 outputs the acquired timer recording information to the program recording apparatus 212. Thus, the setting of television program timer recording is established in the program recording apparatus 212.

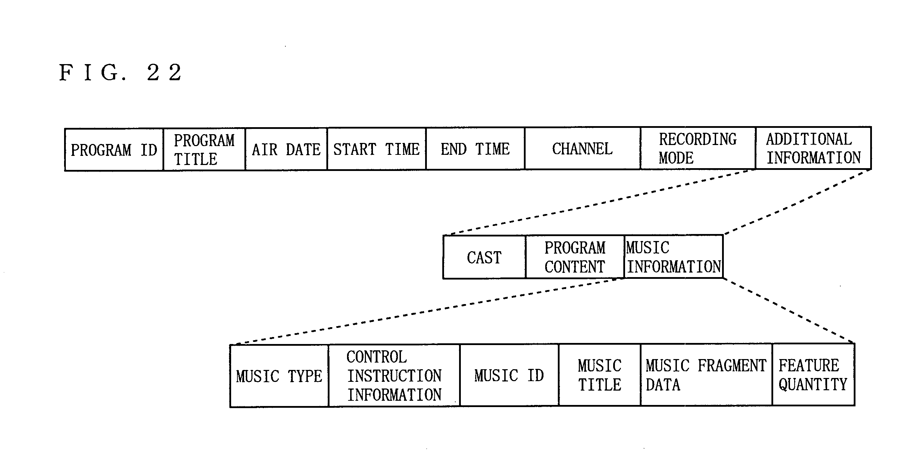

FIG. 22 is a diagram illustrating exemplary timer recording information. The timer recording information is generated for each television program and contains information about the television program. In the example illustrated in FIG. 22, the information about the television program consists of a program ID, a program name, a program air date, a start time, an end time, a channel number, and a recording information. These information contents are acquired as the timer recording information. Alternatively, the information contents may be acquired through the user's input via the program recording apparatus 212 or the timer recording information acquiring apparatus 214. The timer recording information further includes additional information. The additional information refers to information about the contents of the television program. Specifically, the additional information contains cast information, program content information, and music information. The music information contains a pair of feature quantity and control instruction information which is required by the program recording apparatus 212 for a program recording process. The music information further includes a music type, a music ID, a music title, and music fragment data. The music type refers to information indicating how the music is used in the television program. Examples of the music type may include opening theme music played at the beginning of the television program, program-ending music played at the end of the television program, music played immediately before a commercial break, and music played at the restart of the television program immediately after the commercial break. Whether the recording of the television program is started or ended can be determined based on the music type. Thus, in other embodiments, the music type may be used as the control instruction information. The music fragment data refers to a portion of audio signal data for the music.

Note that the feature quantity database 216 illustrated in FIG. 21 previously stores the music title, music ID and feature quantity contained in the above timer recording information. Accordingly, when the timer recording information acquiring apparatus 214 acquires the timer recording information, the music title, the music Id, and the feature quantity may be acquired from the feature quantity database 216.

In the system configuration illustrated in FIG. 21, the timer recording information database 215 and the feature quantity database 216 are separately provided. However, in other embodiments, these databases may be integrally provided as a single unit. Further, in the system configuration illustrated in FIG. 21, the timer recording information database 215 and the feature quantity database 216 are connected to the timer recording information acquiring apparatus 214 via the network. However, these databases may be directly connected to the timer recording information acquiring apparatus 214.

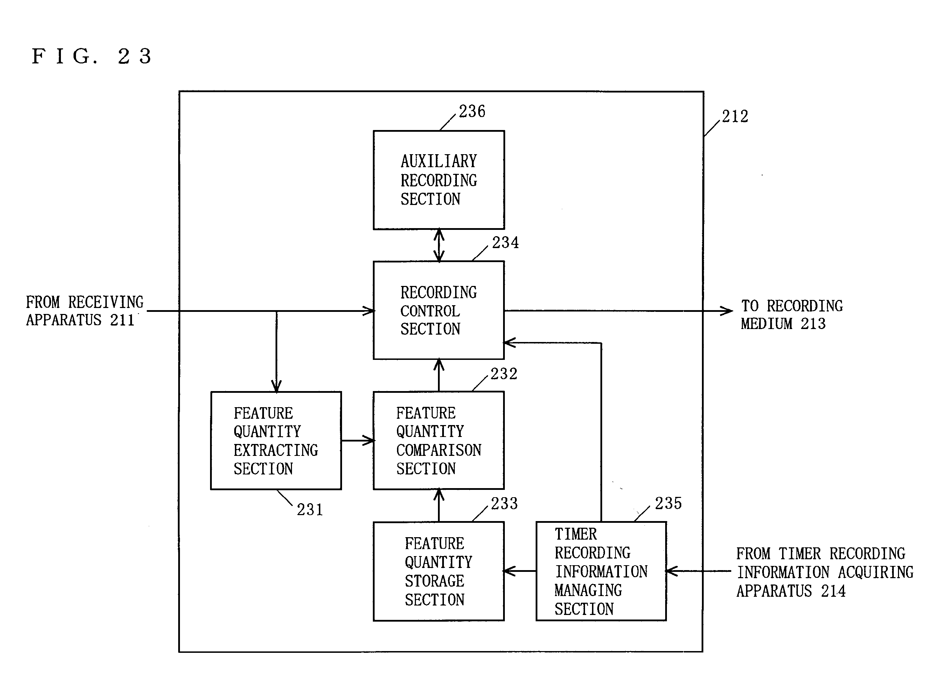

Next, the detailed structure of the program recording apparatus 212 according to the fifth embodiment is described. FIG. 23 is a diagram illustrating the detailed structure of the program recording apparatus according to the fifth embodiment. In FIG. 23, the program recording apparatus 212 includes a feature quantity extracting section 231, a feature comparison section 232, a feature quantity storage section 233, a recording control section 234, a timer recording information managing section 235, and an auxiliary recording section 236. Hereinbelow, an operation of the program recording apparatus 214 is described in detail.

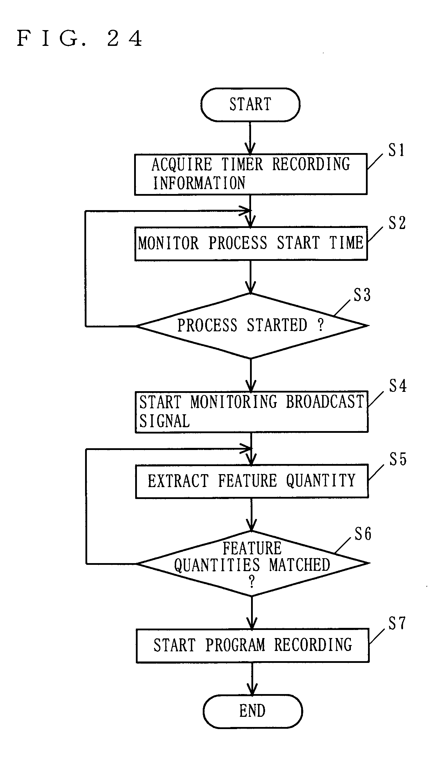

FIG. 24 is a flowchart illustrating a process flow of the program recording apparatus 212 according to the fifth embodiment. Specifically, the flowchart of FIG. 24 shows a series of processes from inputting of timer recording information into the program recording apparatus 212 to the start of the television program. Note that in the fifth embodiment, the feature quantity extracting section 231, the feature quantity comparison section 232, the feature quantity storage section 233, and the recording control section 234 are operable in a similar manner to the quantity extracting section 201, the feature quantity comparison section 202, the feature quantity storage section 203, and the recording control section 204, respectively, illustrated in FIG. 20.

In FIG. 24, the timer recording information managing section 235 acquires timer recording information from the timer recording information acquiring apparatus 214 (step S1). Then, the timer recording information managing section 235 monitors a program start time contained in the timer recording information (step S2), and determines whether to start a process for recording the television program based on the program start time (step S3). This determining process is performed based on whether the current time is the program start time. That is, when the program start time comes, processes at step S4 and subsequent steps are performed, thereby starting the process for recording the television program. On the other hand, when it is determined at step S3 that the current time is not the program start time, the procedure returns to step S2, where the timer recording information managing section 235 waits for the program start time to come.

In the process for recording the television program, firstly, the timer recording information managing section 235 starts monitoring of a broadcast signal (step S4). Specifically, timer recording information managing section 235 causes the recording control section 234 to start receiving the broadcast signal. Further at step S4, the timer recording information managing section 235 causes the feature quantity storage section 233 to store the pair of feature quantity and control instruction information contained in the timer recording information acquired at step S1.

Following step S4, the feature quantity extracting section 231 extracts a feature quantity of an audio signal contained in the broadcast signal (step S5). Then, the feature quantity comparison section 232 compares the feature quantity extracted by the feature quantity extracting section 231 at step S5 with the feature quantity stored in the feature quantity storage section 233 at step S4, and the feature quantity comparison section 232 determines whether these two feature quantities match with each other (step S6). If the two feature quantities match with each other, the process of step S7 is performed. On the other hand, if the two feature quantities do not match, the process of step S5 is performed. The processes of steps S5 and S6 are repeatedly performed until the two feature quantities match with each other.

In the case where the determination at step S6 is positive, i.e., the two feature quantities match with each other, the recording control section 234 starts program recording (step S7). In this procedure described in conjunction with FIG. 24, it is assumed that the audio signal, which has been determined at step S 6 as having a matching feature quantity, indicates the "start recording". Thus, the procedure illustrated in FIG. 24 is completed. Note that in the fifth embodiment, the process for ending the program recording is performed in a manner similar to the fourth embodiment.

In the fifth embodiment, the program recording apparatus 212 may temporarily record the broadcast signal to the auxiliary recording section 236 before starting the program recording. For example, consider a case where it is known from the timer recording information that opening theme music of the television program to be recorded is played tenminutes after the start of the television program. In such a case, the recording control section 234 records a broadcast signal having a length equivalent to a prescribed time period to the auxiliary recording section 236 regardless of the presence or absence of the control instruction information outputted by the feature quantity comparison section 232 . In this exemplary case, an adequate length of the broadcast signal to be recorded is ten minutes. The auxiliary recording section 236 is only required to record a broadcast signal having a length corresponding to a prescribed time period up to the current time, and thus a broadcast signal received the prescribed time period ago is discarded. In this state, when the recording control section 234 receives the control instruction information from the feature quantity comparison section 232, the recording control section 234 records to the recording medium 213 the broadcast signal recorded in the auxiliary recording section 236 as well as a subsequent broadcast signal received after the control instruction information. Thus, it is possible to record the television program from the beginning, even if the opening theme music used for starting the program recording is not played at a time point when the television program is supposed to start.

In this manner, the fifth embodiment can achieve an effect similar to that achieved by the fourth embodiment. Further, in the fifth embodiment, the program recording apparatus can readily acquire the timer recording information from the timer recording information database, and therefore there is neither the need for the user to input the timer recording information nor the need for the program recording apparatus to perform processing for calculating the feature quantity.

Note that in the fifth embodiment, the user may use the timer recording information acquiring apparatus to edit the timer recording information acquired from the timer recording information database. For example, the user may personally set information such as a start time or an end time. Moreover, the user may enter a portion of the timer recording information. For example, the user entry may be made in the mode using the VCRPlus code. The timer recording information stored in the timer recording information database may include an electronic program guide (EPG) used in digital broadcast. Moreover, the timer recording information may be contained in a broadcast signal, and the timer recording information may be acquired by receiving the broadcast signal.

Further, in the fifth embodiment, the timer recording information may contain information for use in setting image quality and sound quality during program recording, and information about a recording bit rate. Based on these pieces of information, the timer recording information managing section 235 may control the recording control section 234.

### (Sixth Embodiment)

A sixth embodiment of the present invention will now be described. In the sixth embodiment, as in the case of the fourth embodiment, a feature quantity extracting apparatus as described in the first through third embodiments is applied in a program recording apparatus for recording a television program. The sixth embodiment is different from the fourth and fifth embodiments in that the timer recording information is obtained from information which has been previously recorded to a recording medium.

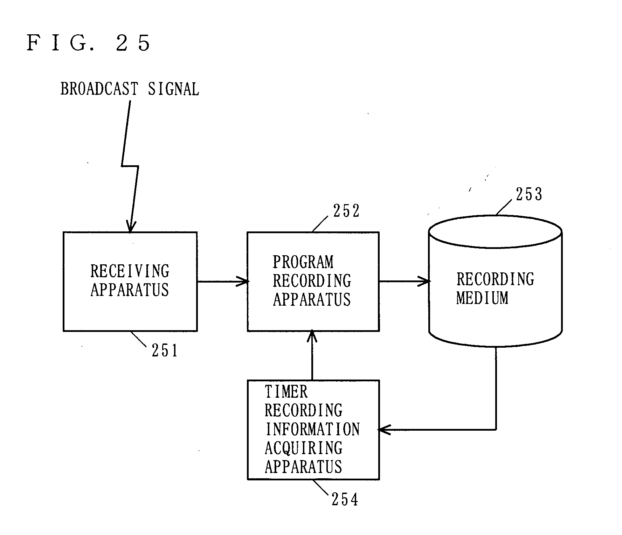

FIG. 25 is a diagram illustrating a structure of a system including the program recording apparatus according to the sixth embodiment. The system illustrated in FIG. 25 includes a receiving apparatus 251, a program recording apparatus 252, a recording medium 253, and a timer recording information acquiring apparatus 254. In the system illustrated in FIG. 25, each element other than the timer recording information acquiring apparatus 254 operates in a manner similar to a corresponding element described in the fourth or fifth embodiment.

In the sixth embodiment, a broadcast signal contains information which is used as the timer recording information, and such information is recorded , together with a television program to the recording medium 253 during program recording. The timer recording information acquiring apparatus 254 acquires the timer recording information from the recording medium 253 in accordance with the user's entry. The feature quantity contained in the timer recording information may be recorded together with the broadcast signal to the recording medium 253 or may be extracted by a feature quantity extracting section included in the program recording apparatus 252 when the timer recording information acquiring apparatus 254 acquires the timer recording information.

In this manner, in the sixth embodiment, the timer recording information, which has been acquired in the past, can be acquired without searching through a timer recording information database via a network. In the system described in the sixth embodiment, it is possible to reuse program data previously recorded, and therefore it is not necessary to repeatedly acquire the same timer recording information from the timer recording information database. Thus, the system described in the sixth embodiment has an advantage in that once the timer recording information is acquired, a process for acquiring the same timer recording information can be simplified at second and subsequent acquisitions. This is particularly advantageous in the case of recording a regularly broadcast program, such as a daily news program or a weekly serial drama.

### (Seventh Embodiment)

A seventh embodiment of the present invention will now be described. In the seventh embodiment, a feature quantity extracting apparatus as described in the first through third embodiments is applied in a program reproduction control apparatus.

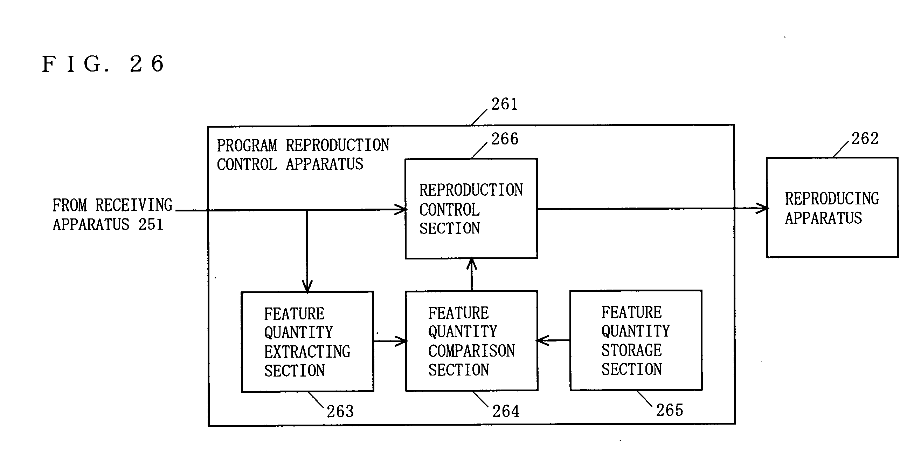

FIG. 26 is a diagram illustrating a structure of a system including the program reproduction control apparatus according to the seventh embodiment. The system illustrated in FIG. 26 includes a program reproduction control apparatus 261 and a reproducing apparatus 262. Although not shown in the figure, the system of the seventh embodiment includes a receiving apparatus. The receiving apparatus has a function similar to that of the receiving apparatus illustrated in FIG. 19.

The program reproduction control apparatus 261 includes a feature quantity extracting section 263, a feature quantity comparison section 264, a feature quantity storage section 265, and a reproduction control section 266. Each of elements other than the reproduction control section 266 operates in a manner similar to a corresponding element illustrated in FIG. 19. The reproduction control section 266 starts or ends a reproduction operation in accordance with control instruction information outputted by the feature quantity comparison section 264. In the seventh embodiment, the control instruction information refers to the information used for instructing an operation related to reproduction of a broadcast signal, such as the "start reproduction" or the "end reproduction". Note that the reproducing apparatus 262 does not perform a reproducing operation before reproduction is started and after the reproduction is ended.

The reproducing apparatus 262 having the above configuration reproduces only the user's desired television program. Further, the television program can be reproduced without reproducing commercials. In the case where a broadcast signal has already been received and held in the program reproduction control apparatus 261 or the receiving apparatus, the broadcast signal can be reproduced such that the television program contained therein is continuously and seamlessly played by skipping commercials, i.e., the playing of the television program is not stopped for a time period corresponding to duration of the commercial.

### (Eighth Embodiment)

An eight embodiment of the present invention will now be described. In the eighth embodiment, a feature quantity extracting apparatus as described in the first through third embodiments is applied in a program editing apparatus.

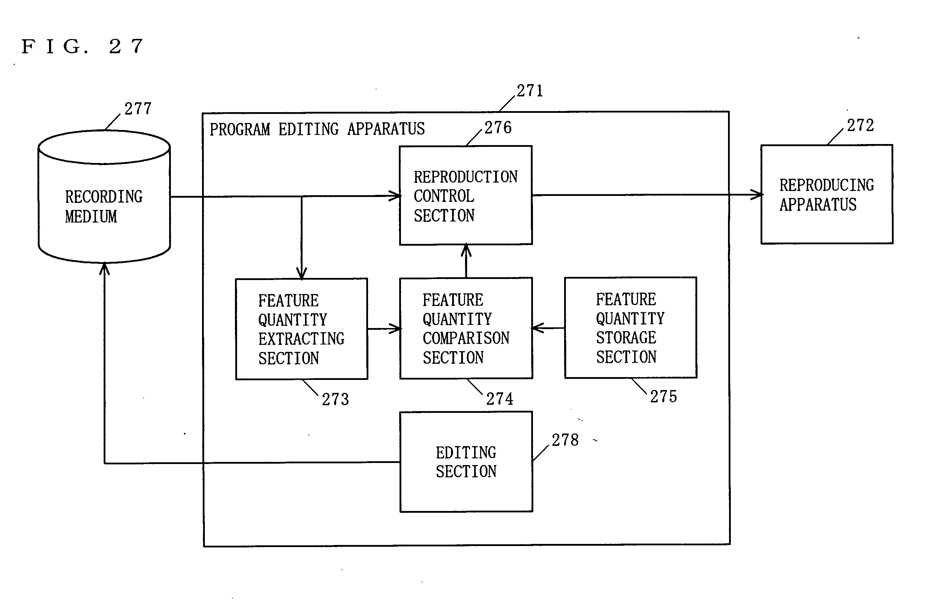

FIG. 27 is a diagram illustrating a structure of a system including the program editing apparatus according to the eighth embodiment. The system illustrated in FIG. 27 includes a program editing apparatus 271, a reproducing apparatus 272, and a recording medium 277.

The eighth embodiment is similar to the seventh embodiment except that the system of the eight embodiment include the recording medium 277 instead of including a receiving apparatus, and also includes the program editing apparatus 271 having an editing section 278. Similar to the seventh embodiment, among television programs stored in the recording medium 277, only the user's desired program is reproduced. The user is able to edit the television program using the editing section 278 while viewing the television program reproduced. Data for the program edited by the editing section 278 is recorded to the recording medium 277. In this case, the data may be recorded over data for the program before editing or may be record as new data separate from the data for the program before editing.

In this manner, in the program editing apparatus of the eighth embodiment, it is possible to accurately extract a television program which the user desires to edit from among a plurality of program data recorded the recording medium, and to reproduce the television program extracted.

The feature quantity extracting apparatus as described above can be used for the purpose of clearly distinguishing one audio signal from another audio signal, for example.

While the invention has been described in detail, the foregoing description is in all aspects illustrative and not restrictive. It is understood that numerous other modifications and variations can be devised without departing from the scope of the invention.

## Claims

1. A feature quantity extracting apparatus comprising:
a frequency transforming section (11) for performing a frequency transform on a signal portion corresponding to a prescribed time length, which is contained in an inputted audio signal, to derive a frequency spectrum from the signal portion;
a band extracting section (12) for extracting a plurality of frequency bands from the frequency spectrum derived by the frequency transforming section and for outputting band spectra which are respective frequency spectra of the extracted frequency bands; and
a feature quantity calculating section (13) for calculating respective prescribed feature quantities of the band spectra, the feature quantity calculating section obtaining the calculated prescribed feature quantities as feature quantities of the audio signal.

2. The feature quantity extracting apparatus according to claim 1, wherein the band extracting section extracts the plurality of frequency bands obtained by dividing the frequency spectrum, which has been derived by the frequency transforming section, at uniform intervals on a linear scale of a frequency axis.

3. The feature quantity extracting apparatus according to claim 1, wherein the band extracting section extracts the plurality of frequency bands obtained by dividing the frequency spectrum, which has been derived by the frequency transforming section, at uniform intervals on a logarithmic scale of a frequency axis.

4. The feature quantity extracting apparatus according to claim 1, wherein the band extracting section extracts only frequency bands within a prescribed frequency range from the frequency spectrum derived by the frequency transforming section.

5. The feature quantity extracting apparatus according to claim 1, wherein the band extracting section extracts frequency bands so as to generate a prescribed space between adjacent frequency bands extracted.

6. The feature quantity extracting apparatus according to claim 1, wherein the feature quantity calculating section calculates peak values corresponding to values at respective peaks of the band spectra, and obtains, as the prescribed feature quantities, values of difference between peak values of frequency bands.

7. The feature quantity extracting apparatus according to claim 6, wherein the feature quantity calculating section uses binary values to represent the values of difference between peak values of frequency bands, the binary values indicating a sign of a corresponding one of the values of difference.

8. The feature quantity extracting apparatus according to claim 1, wherein the feature quantity calculating section calculates peak frequencies corresponding to frequencies at respective peaks of the band spectra, and obtains, as the prescribed feature quantities, numerical values related to the calculated peak frequencies.

9. The feature quantity extracting apparatus according to claim 8, wherein the feature quantity calculating section calculates, as the prescribed feature quantities, values of difference between peak frequencies of frequency bands.

10. The feature quantity extracting apparatus according to claim 9, wherein the feature quantity calculating section represents the prescribed feature quantities using binary values indicating whether a corresponding one of the values of difference between peak frequencies of frequency bands is greater than a prescribed value.

11. The feature quantity extracting apparatus according to claim 1, wherein the frequency transforming section extracts from the audio signal the signal portion corresponding to a prescribed time length at prescribed time intervals, and
wherein the feature quantity calculating section includes:
a peak frequency calculating section(61) for calculating peak frequencies corresponding to frequencies at respective peaks of the band spectra; and
a peak frequency time variation calculating section(63) for calculating, as the prescribed feature quantities, numerical values related to respective time variation quantities of the peak frequencies calculated by the peak frequency calculating section.

12. The feature quantity extracting apparatus according to claim 11, wherein the peak frequency time variation calculating section obtains, as the prescribed feature quantities, binary values indicating a sign of a corresponding one of the time variation quantities of the peak frequencies.

13. The feature quantity extracting apparatus according to claim 11, wherein the peak frequency time variation calculating section obtains, as the prescribed feature quantities, binary values indicating whether a corresponding one of the time variation quantities of the peak frequencies is greater than a prescribed value.

14. The feature quantity extracting apparatus according to claim 1, wherein the feature quantity calculating section calculates, as the prescribed feature quantities,effective values of respective frequency spectra of the frequency bands.

15. The feature quantity extracting apparatus according to claim 1, wherein the frequency transforming section extracts from the audio signal the signal portion corresponding to a prescribed time length at prescribed time intervals, and
wherein the feature quantity calculating section includes:
an effective value calculating section(81) for calculating effective values of respective frequency spectra of the band spectra; and
an effective value time variation calculating section(83) for calculating, asthe prescribed feature quantities, numerical values related to respective time variation quantities of the effective values calculated by the effective value calculating section.

16. The feature quantity extracting apparatus according to claim 15, wherein the effective value time variation calculating section obtains, as the prescribed feature quantities, binary values indicating a sign of a corresponding one of the time variation quantities of the effective values.

17. The feature quantity extracting apparatus according to claim 15, wherein the effective value time variation calculating section obtains, as the prescribed feature quantities, binary values indicating whether a corresponding one of the time variation quantities of the effective values is greater than a prescribed value.

18. The feature quantity extracting apparatus according to claim 1, wherein the frequency transforming section extracts from the audio signal the signal portion corresponding to a prescribed time length at prescribed time intervals, and
wherein the feature quantity calculating section calculates a cross-correlation value between a frequency spectrum of a frequency band extracted by the band extracting section and another frequency spectrum on the same frequency band in a signal portion different from the signal portion from which the frequency band extracted by the band extracting section is obtained, the cross-correlation value being calculated for each frequency band extracted by the band extracting section, and the feature quantity calculating section using, as the feature quantities, numerical values related to the cross-correlation values.

19. The feature quantity extracting apparatus according to claim 18, wherein the feature quantity calculating section calculates, as the prescribed feature quantities, binary values indicating a sign of a corresponding one of the cross-correlation values.

20. The feature quantity extracting apparatus according to claim 18, wherein the feature quantity calculating section calculates, as the prescribed feature quantities, numerical values related to respective time variation quantities of the calculated cross-correlation values.

21. A feature quantity extracting apparatus comprising:
a signal extracting section (111) for extracting from an extracted audio signal a plurality of signal portions each corresponding to a prescribed time length; and
a feature quantity calculating section (113) for calculating a cross-correlation value between one of the plurality of signal portions extracted by the signal extracting section and another of the plurality of signal portions, the feature quantity calculating section obtaining a numerical value related to the calculated cross-correlation value as a feature quantity of the audio signal.

22. The feature quantity extracting apparatus according to claim 21, wherein the feature quantity calculating section obtains the cross-correlation value as the feature quantity of the audio signal.

23. The feature quantity extracting apparatus according to claim 21, wherein the feature quantity calculating section obtains a binary value as the feature quantity of the audio signal, the binary value indicating a sign of the cross-correlation value.

24. The feature quantity extracting apparatus according to claim 21, wherein the signal extracting section extracts the signal portions at prescribed time intervals, and
wherein the feature quantity calculating section includes:
a cross-correlation value calculating section (131) for calculating the cross-correlation value at the prescribed time intervals; and
a cross-correlation value time variation calculating section(133) for calculating a time variation quantity of the cross-correlation value as the feature quantity of the audio signal.

25. Afeature quantity extracting apparatus comprising:
a frequency transforming section(141) for performing a frequency transform on a signal portion corresponding to a prescribed time length, which is contained in an inputted audio signal, to derive frequency spectra from the signal portion;
an envelope curve deriving section(142) for deriving envelope signals which represents envelop curves of the frequency spectra derived by the frequency transforming section; and
a feature quantity calculating section(143) for calculating, as feature quantities of the audio signal, numerical values related to respective extremums of the envelope signals derived by the envelope curve deriving section.

26. The feature quantity extracting apparatus according to claim 25, wherein the feature quantity calculating section obtains, as the feature quantities of the audio signal, extremum frequencies each being a frequency corresponding to one of the extremums of the envelope signals derived by the envelope curve deriving section.

27. The feature quantity extracting apparatus according to claim 25, wherein the feature quantity calculating section includes:
an extremum frequency calculating section(171) for calculating the extremum frequencies each being a frequency corresponding to one of the extremums of the envelope signals derived by the envelope curve deriving section; and
a space calculating section(172) for calculating spaces between adjacent extremum frequencies as the feature quantities of the audio signal.

28. The feature quantity extracting apparatus according to claim 27, wherein the space calculating section obtains, as the feature quantities of the audio signal, numerical values which represent a space as a ratio to a prescribed reference value.

29. The feature quantity extracting apparatus according to claim 28, wherein the space calculating section obtains, as the prescribed reference value, the lowest of the extremum frequencies.

30. The feature quantity extracting apparatus according to claim 28, wherein the space calculating section obtains, as the prescribed reference value, a value of difference between the lowest and the second lowest of the extremum frequencies.

31. Aprogram recording apparatus comprising the feature quantity extracting apparatus of claim 1, which receives television program data containing an audio signal and a video signal, and is capable of recording the television program data to a recording medium, wherein the feature quantity extracting apparatus obtains a feature quantity of the audio signal contained in the television program data,
wherein the program recording apparatus further comprises:
a recording control section (234) for controlling recording of the television program data to the recording medium;
a feature quantity storage section (233) which stores at least a set of a feature quantity of an audio signal and control instruction information associated therewith, the audio signal containing music played in a television program to be recorded, the control instruction information instructing the recording control section to perform or stop recording of the television program;
a feature quantity comparison section (232) for determining whether the audio signal contained in the television program data matches with the audio signal containing the music played in the television program based on both the feature quantity obtained by the feature quantity extracting apparatus and the feature quantity stored in the feature quantity storage section, and
wherein when the feature quantity comparison section determines that the audio signal contained in the television program data matches with the audio signal containing the music played in the television program, the recording control section performs the control of performing or stopping recording of the television program data to the recording medium in accordance with an instruction indicated by control instruction information which is stored in the feature quantity storage section and associated with a feature quantity of the audio signal having been determined as matching with the audio signal containing the music played in the television program.

32. The program recording apparatus according to claim 31, further comprising an auxiliary recording section (236) for recording only a prescribed amount of television program data received, wherein the feature quantity storage section stores information associated with a set of a feature quantity and control instruction information associated with the feature quantity, the information indicating elapsed time from starting of the television program to be recorded to playing of music, which is contained in an audio signal having the feature quantity, in the television program, and
wherein in the case where the feature quantity comparison section determines that there is a match, and control instruction information, which is stored in the feature quantity storage section and associated with the feature quantity of the audio signal having been determined as being a match, instructs recording of the television program, the recording control section starts recording of the television program data received to the recording medium while recording the television program data recorded in the auxiliary recording section to the recording medium, a duration of the television program data to be recorded to the recording medium corresponding to the elapsed time indicated by the information associated with the control instruction information.

33. A program reproduction control apparatus comprising the feature quantity extracting apparatus of claim 1, which receives television program data containing an audio signal and a video signal, and is capable of reproducing the television program data, wherein the feature quantity extracting apparatus obtains a feature quantity of the audio signal contained in the television program data,
wherein the program recording apparatus further comprises:
a reproduction control section(266) for controlling reproducing of the television program data;
a feature quantity storage section(265) which stores at least a set of a feature quantity of an audio signal and control instruction information associated therewith, the audio signal containing music played in a television program to be reproduced, the control instruction information instructing the reproduction control section to perform or stop reproducing of the television program;
a feature quantity comparison section(264) for determining whether the audio signal contained in the television program data matches with the audio signal containing the music played in the television program based on both the feature quantity obtained by the feature quantity extracting apparatus and the feature quantity stored in the feature quantity storage section, and
wherein when the feature quantity comparison section determines that the audio signal contained in the television program data matches with the audio signal containing the music played in the television program, the recording control section performs the control of performing or stopping reproducing of the television program data in accordance with an instruction indicated by control instruction information which is stored in the feature quantity storage section and associated with a feature quantity of the audio signal having been determined as matching with the audio signal containing the music played in the television program.

34. The program reproduction control apparatus according to claim 33, wherein the television program data is recorded in a recording medium(277), and
wherein the program reproduction control apparatus further comprises an editing section(278) capable of editing the television program data recorded in the recording medium.
